# EUROPÄISCHE PATENTSCHRIFT

(11) **EP 2 178 939 B1**
(45) Veröffentlichungstag und Bekanntmachung des Hinweises auf die Patenterteilung: **09.02.2011**
(21) Anmeldenummer: 08785278.6
(22) Anmeldetag: 01.08.2008
(51) Int. Cl.: C08G 18/12, C08G 18/67, C09D 175/14, C09J 175/14

(54) **VERFAHREN ZUR HERSTELLUNG VON HARTEN BESCHICHTUNGSSYSTEME AUF BASIS WÄSSRIGER POLYURETHANDISPERSIONEN**
PROCESS FOR PRODUCING HARD COATING SYSTEMS BASED ON AQUEOUS POLYURETHANE DISPERSIONS
PROCÉDÉ DE PRODUCTION DE SYSTÈMES DE REVÊTEMENTS DURS À BASE DE DISPERSIONS AQUEUSES DE POLYURÉTHANE

(30) Priorität: 11.08.2007 DE 102007038085
(43) Veröffentlichungstag der Anmeldung: 28.04.2010
(73) Patentinhaber: Bayer MaterialScience AG, 51368 Leverkusen (DE)
(72) Erfinder: SOMMER, Stefan, 51375 Leverkusen (DE); KOPP, Richard, 51061 Köln (DE); BLUM, Harald, 97840 Hafenlohr (DE); IRLE, Christoph, 200135 Shanghai (CN); WEIKARD, Jan, 51519 Odenthal-Erberich (DE); LUEHMANN, Erhard, 29699 Bomlitz (DE)
(86) Internationale Anmeldenummer: PCT/EP2008/006337
(87) Internationale Veröffentlichungsnummer: WO 2009/021640

(56) Entgegenhaltungen:
- EP-A- 0 872 502
- EP-A- 1 106 633
- WO-A-2006/138557

## Beschreibung

Die vorliegende Erfindung beschreibt ein Verfahren zur Herstellung harter, strahlungshärtbaren Beschichtungssysteme auf der Basis wässriger Polyurethandispersionen, die Beschichtungssysteme erhältlich nach dem Verfahren, die Verwendung der Beschichtungssysteme als Lacke und/oder Klebstoffe sowie Gegenstände und Substrate, die diese Lacke und/oder Klebstoffe enthalten.

Strahlungshärtbare, wässrige Beschichtungssysteme auf Basis eines Polyurethanpolymers finden Anwendung in der Beschichtung unter anderem von Holz, Kunststoffen und Leder und zeichnen sich durch eine Vielzahl positiver Eigenschaften, wie gute Chemikalienbeständigkeit und mechanische Stabilität, aus. Ein besonderer Vorteil ist die sekundenschnelle Aushärtung der Polyurethandeckschicht durch Quervernetzung der im Polymer enthaltenen ethylenischen Doppelbindungen mithilfe energiereicher Strahlung.

Werden wässrige, strahlungshärtbare Polyurethandispersionen in Beschichtungssystemen für pigmentierte Lacke eingesetzt, so wird aufgrund der Absorption und Streuung des Pigments die photochemische Aushärtung erschwert. Dies hat zur Folge, dass die Beschichtung nur teilweise aushärtet und die qualitativ hochwertigen Eigenschaften eines Polyurethan-Klarlacks nicht erreicht werden.

In EP-B 753 531 und EP-B 942 022 werden Polyesteracrylaturethan-Dispersionen auf Basis von hydroxylgruppenhaltigen Polyester-, Polyether- und Poylepoxyacrylaten beschrieben. Oligomethacrylate, wie sie in dieser Anmeldung als Komponente (E) aufgeführt werden, kommen in EP-B 753 531 und EP-B 942 022 nicht vor. Die beschriebenen Beschichtungssysteme eignen sich für physikalisch trocknende Klarlacke insbesondere für Holz- und Kunststoffanwendungen. Bei Pigmentierung solcher Bindemittelsysteme wird aufgrund ungenügender Reaktivität nur eine geringe Härte und ungenügende Beständigkeiten gegen Chemikalien und färbenden Flüssigkeiten erreicht. Wässrige, strahlungshärtbare Polyurethandispersionen auf der Basis von hydroxylgruppenhaltigen Polyester- und Polyetheracrylaten finden sich in EP-B 872 502. Auch hier besteht die bevorzugte Anwendung der Beschichtungssysteme in Klarlacken. Oligomethacrylate, wie sie in dieser Anmeldung als Komponente (E) aufgeführt werden, kommen in EP-B 872 502 nicht vor. Das aufgeführte Beispiel (Nr. 10) für pigmentierte Lacke beweist schon bei 10 Gew.-% Pigment die Empfmdlichkeit gegenüber Kaffee, Senf und Rotwein. Die Fleckenempfindlichkeit könne durch Aufbringen eines zusätzlichen Klarlacks verbessert werden. Auf die Härte des pigmentierten Systems wird nicht eingegangen. Auf Elastizität und Härte wird im Gegensatz zu allen anderen Beispielen nicht eingegangen.

EP-B 1311 639 beschreibt die Herstellung und Verwendung eines Beschichtungssystems für Furnierholz auf Basis von Polyurethandispersionen. Die Dispersionen beinhalten neben einem Polyurethanacrylat eine Lösemittel-Komponente, bevorzugt *N*-Methylpyrrolidon. Beschrieben wird die Anwendung im Postforming-Verfahren, bei dem es auf eine hohe Flexibilität der Furnierhölzer ankommt. Die erhaltenen Überzüge sind schon als Klarlack sehr weich. Pigmentierte Systeme auf Basis der angeführten Bindemittel sind noch deutlich weniger geeignet. Des Weiteren ist die Verwendung von *N*-Methylpyrrolidon aufgrund seiner fruchtschädigenden Wirkung nicht erwünscht. Ein Hinweis, dass ohne Einsatz einer solchen Lösemittel-Komponente man wässrige Polyurethandispersionen erhält, die für den Einsatz von harten Beschichtungssystemen geeignet sind, findet sich in EP-B 1 311 639 nicht.

In EP-B 181 486 werden Polyurethandispersion beschrieben, die auf Polyether-, Polyester-, Polylacton- und Carbonatdiolen und / oder Mischungen davon beruhen, aber am Polyurethangerüst keine Acrylatfunktionen tragen. Durch Zumischen acrylathaltiger Verbindungen wird eine wässrige, UV-härtbare Polyurethandispersion zur Hochglanz-Beschichtung von Leder erhalten. Da zwischen den acrylathaltigen Verbindungen und dem Polyurethan keine photoinduzierte Vernetzung stattfinden kann, werden sehr weiche, flexible und wenig chemikalienbeständige Aufzüge erhalten. Dass wässrige Polyurethandispersionen, die am Polyurethangerüst Acrylatfunktionen tragen zur Herstellung von harten Beschichtungssystemen eingesetzt werden können, wird in EP-B 181 486 nicht offenbart.

Bei stark strapazierten Alltagsgegenständen, wie z. B. Mobiltelefongehäusen, bei denen geringste Verkratzbarkeit, höchste Chemikalienresistenz, Haftung und ansprechende Optik gefordert werden, sind immer noch lösungsmittelhaltige Beschichtungssysteme im Einsatz, weil wässrige Bindemittel, wie im hier aufgeführten Stand der Technik, in der Summe ihrer Eigenschaften, wie z. B. Hochglanz und Beständigkeit gegen Sonnencreme, noch nicht ausreichend gute Erfolge erzielen. Aus umweltpolitischen Gründen ist auch hier der Umstieg auf wässrige Systeme gefordert.

Die Aufgabe der vorliegenden Erfindung ist es daher ein Verfahren bereit zu stellen, das es ermöglicht Beschichtungssysteme zur Verfügung zu stellen, die auf einer wässrigen, strahlenhärtbaren Dispersion beruhen, pigmentierbar sind, sich durch mechanische Stabilität, Chemikalienbeständigkeit und durch hohen Glanz auszeichnen.

Diese Aufgabe wird gelöst durch Verfahren zur Herstellung von harten, strahlungs-härtbaren, Beschichtungssystemen auf Basis von wässrigen Polyurethandispersionen umfassend folgende Schritte
I) Umsetzung von:
   A) 40 bis 80 Gew.-% einer hydroxylhaltigen Komponente enthaltend
      A1) 10 bis 80 Gew.-%, bezogen auf die Summe der Komponenten (A) bis (F), eines oder mehrerer hydroxylgruppenhaltiger Präpolymere, die ausgewählt sind aus der Gruppe von Polyester, Polyether, Polyepoxy(meth)acrylate und Polyurethane mit einer OH-Zahl im Bereich von 40 bis 300 mg KOH/g und Gruppen enthalten, die unter Einwirkung energiereicher Strahlung mit ethylenisch ungesättigten Doppelbindungen unter Polymerisation reagiert,
         und gegebenenfalls
      A2) 0 bis 50 Gew.-%, bezogen auf die Summe der Komponenten (A) bis (F), eines oder mehrerer (Meth)acrylatgruppenhaltiger Alkohole mit einer OH-Zahl im Bereich von 35 bis 1000 mg KOH/g
   B) 0,1 bis 20 Gew.-% einer oder mehrerer gegenüber Isocyanatgruppen reaktiven Verbindungen, die für die Polyurethandispersion dispergierend wirkt,
   C) 0 bis 30 Gew.-% hydroxyfunktionelle Verbindungen ausgewählt aus der Gruppe von Diolen, Triolen jeweils mit einem Molekulargewichts im Bereich von 62 bis 242 g/mol, Polyestern, Polycarbonaten, Polyurethanen, C₂-, C₃-, und / oder C₄-Polyethern, Polyetherestern und Polycarbonatpolyestern jeweils mit einem Molekulargewicht im Bereich von 700 bis 4000 g / Mol
      mit
   D) 10 bis 50 Gew.-% eines oder mehrerer Polyisocyanate zu einem Polyurethan und danach
II) Zusatz von
   E) 2 bis 40 Gew.-% Oligo(meth)acrylate, die ausgewählt sind aus der Gruppe der Komponente (A1) mit einer Doppelbindungsdichte von größer 2,0 mol Doppelbindungen/kg Substanz und durch Einwirkung energiereicher Strahlung mit ethylenisch ungesättigten Verbindungen unter Polymerisation reagieren,
      III) anschließende Dispergierung des nach Schritt II) erhaltenen Produktes in Wasser zu einer wässrigen Polyurethandispersion und
      IV) Umsetzung der aus Schritt III) erhaltenen wässrigen Polyurethandispersion mit
   F) 0,1 bis 10 Gew.-%, eines oder mehrerer Mono-, Di-, oder Polyamine und / oder Aminoalkohole,
   wobei sich die Anteile der Komponenten (A) bis (F) zu 100 Gew.-% addieren und die Beschichtungssysteme nach Härtung eine Pendelhärte nach König nach DIN 53157 von größer 60 sec bei einem 150 µm dicken Nassfilmstärkeauftrag und nach EN ISO 527 eine Bruchdehnung von kleiner 150% bei einem 250 µm dicken Nassfilmstärkeauftrag aufweisen.

Vorteilhaft ist das erfindungsgemäße Verfahren, wenn die Komponenten (A), (B) und (C) im Reaktor vorgelegt, gegebenenfalls mit einem mit Wasser mischbaren aber gegenüber Isocyanatgruppen inerten Lösungsmittel verdünnt und auf Temperaturen von 30 bis 80 °C aufgeheizt werden, wobei gegebenenfalls zur Mischung der Verbindungen (A), (B) und (C) Isocyanatadditionsreaktionkatalysatoren gegeben werden, bevor der Umsatz mit dem oder den Polyisocyanaten (D) erfolgt, wobei die molaren Verhältnisse von gegenüber Isocyanaten reaktiven Gruppen in (A), (B) und (C) zu Isocyanatgruppen in (D) im Bereich von 0,8 : 1 bis 2,5 : 1 liegen und wobei das Polyurethan, erhältlich nach Schritt I), mit den Oligo(meth)acrylaten (E) in Aceton zu einer Oligo(meth)acrylat-Aceton-Lösung gelöst werden und unter starkem Rühren gemäß Schritt III) und IV) entweder in das Dispergierwasser, das das oder die Polyamine (F) enthält, eingetragen oder umgekehrt die Dispergierwasser-Polyamin-Mischung zu der Polyurethan-Oligo(meth)acrylat-Aceton-Lösung gegeben wird. Gegebenenfalls wird das Aceton anschließend abdestilliert.

Ein weiterer Gegenstand der Erfindung sind harte, strahlungshärtbare Beschichtungssysteme erhältlich nach dem erfindungsgemäßen Verfahren.

Vorteilhaft ist das Beschichtungssystem, erhältlich nach dem erfindungsgemäßen Verfahren, wenn der Neutralisationsgrad der durch Komponente (B) eingeführten Säuren und / oder Basen zwischen 50% und 125% liegt.

Vorteilhaft ist das Beschichtungssystem, erhältlich nach dem erfindungsgemäßen Verfahren, wenn die Umsetzung IV) der noch freien Isocyanatgruppen des Präpolymers durch Komponente (F) zu 35% bis 150% erfolgt.

Vorteilhaft ist das Beschichtungssystem, erhältlich nach dem erfindungsgemäßen Verfahren, wenn 2 bis 40 Gew.-% Oligo(meth)acrylate (E) auf der Basis von (Meth)acrylatstern, erhältlich aus der Veresterung von (Meth)acrylsäure mit Alkoholen, ausgewählt aus der Gruppe von Diolen, Triolen, Tetrolen und Hexolen, enthalten sind.

Vorteilhaft ist das Beschichtungssystem, erhältlich nach dem erfindungsgemäßen Verfahren, wenn 2 bis 40 Gew.-% Oligo(meth)acrylate (E) auf der Basis von Polyester(meth)acrylaten mit einer OH-Zahl im Bereich von 30 bis 300 mg KOH/g enthalten sind.

Vorteilhaft ist das Beschichtungssystem, erhältlich nach dem erfindungsgemäßen Verfahren, wenn 2 bis 40 Gew.-% Oligo(meth)acrylate (E) auf der Basis von Polyether(meth)acrylaten mit einer OH-Zahl im Bereich von 5 bis 200 mg KOH/g, enthalten sind.

Vorteilhaft ist das Beschichtungssystem, erhältlich nach dem erfindungsgemäßen Verfahren, wenn 2 bis 40 Gew.-% Oligo(meth)acrylate (E) auf der Basis von Polyepoxy(meth)acrylaten mit einer OH-Zahl im Bereich von 20 bis 300 mg KOH/g enthalten sind.

Vorteilhaft ist das Beschichtungssystem, erhältlich nach dem erfindungsgemäßen Verfahren, wenn 2 bis 40 Gew.-% Oligo(meth)acrylate (E) auf der Basis von Polyurethan(meth)acrylaten mit einer OH-Zahl im Bereich von 20 bis 300 mg KOH/g enthalten sind.

Vorteilhaft ist das Beschichtungssystem, erhältlich nach dem erfindungsgemäßen Verfahren, wenn 2 bis 40 Gew.-% von Mischungen der Oligo(meth)acrylate (E) ausgewählt aus der Gruppe von Polyester-, Polyether-, Polyurethan-, Polyepoxy(meth)acrylaten und (Meth)acrylatester erhältlich durch Veresterung von Methacrylsäure mit Alkoholen ausgewählt aus der Gruppe von Diolen, Triolen, Tetrolen und Hexolen, enthalten sind.

Vorteilhaft ist das Beschichtungssystem, erhältlich nach dem erfindungsgemäßen Verfahren, wenn der Schritt IV) in acetonischer Lösung vor oder nach der Zugabe der Komponente E durchgeführt wird.

Vorteilhaft ist das Beschichtungssystem, erhältlich nach dem erfindungsgemäßen Verfahren, wenn die wässrige Polyurethan-Dispersion, erhältlich nach Schritt III), mindestens noch einen Initiator und gegebenenfalls weitere Hilfsmittel und Zusatzstoffe enthält, die eine Aushärtung mit energiereicher Strahlung ermöglichen.

Vorteilhaft ist das Beschichtungssystem, erhältlich nach dem erfindungsgemäßen Verfahren, wenn die wässrige Polyurethan-Dispersion, erhältlich nach Schritt III) weniger als 5 Gew.-% an organischen Lösemitteln enthält.

Ein weiterer Gegenstand der Erfindung ist die Verwendung des Beschichtungssystems erhältlich nach dem erfindungsgemäßen Verfahren zur Herstellung von Klebstoffen und/oder harten Klar-oder pigmentierten Lacken.

Ein weiterer Gegenstand der Erfindung ist die Verwendung des Beschichtungssystems erhältlich nach dem erfindungsgemäßen Verfahren zur Herstellung von Klebstoffen und/oder harten Klar-oder pigmentierten Lacken, die eine hohe Resistenz gegen Lösungsmittel und färbende Stoffe aufzeigen.

Vorteilhaft ist die Verwendung des Beschichtungssystems, erhältlich nach dem erfindungsgemäßen Verfahren, wenn die Klebstoffe und/oder harten Klar- oder pigmentieren Lacke eine Pendelhärte nach König nach DIN 53157 von größer 60 sec bei einem 150 µm dicken Nassfilmstärkeauf trag und nach EN ISO 527 eine Bruchdehnung von kleiner 150% bei einem 250µm dicken Nassfilmstärkeauftrag aufweisen.

Ein weiterer Gegenstand der Erfindung sind harte Klar- oder pigmentierte Lacke, die ein Beschichtungssystem enthalten, das nach dem erfindungsgemäßen Verfahren erhältlich ist.

Ein weiterer Gegenstand der Erfindung ist ein Klebstoff, der ein Beschichtungssystem enthält, das nach dem erfindungsgemäßen Verfahren erhältlich ist.

Ein weiterer Gegenstand der Erfindung ist die Verwendung des harten Klar- oder pigmentierten Lackes, der ein Beschichtungssystem enthält, das nach dem erfindungsgemäßen Verfahren erhältlich ist, zur Herstellung eines lackierten Substrates.

Ein weiterer Gegenstand der Erfindung ist die Verwendung des Klebstoffes, der ein Beschichtungssystem enthält, das nach dem erfindungsgemäßen Verfahren erhältlich ist, zur Herstellung eines Gegenstandes der aus mindestens zwei oder mehr Materialien aufgebaut ist.

Ein weiterer Gegenstand der Erfindung ist ein Substrat enthaltend einen harten Klar- oder pigmentierten Lack, der ein Beschichtungssystem enthält, das nach dem erfindungsgemäßen Verfahren erhältlich ist.

Vorteilhaft ist das Substrat, enthaltend einen harten Klar- oder pigmentierten Lack, der ein Beschichtungssystem enthält, das nach dem erfindungsgemäßen Verfahren erhältlich ist, wenn das Substrat ausgewählt ist aus der Gruppe von Holz, Holzwerkstoffen, Möbel, Parkett, Türen, Festerrahmen, metallische Gegenstände, Kunststoffe, Papier, Pappe, Kork oder Leder.

Ein weiterer Gegenstand der Erfindung ist ein Gegenstand enthaltend den Klebstoff, der ein Beschichtungssystem enthält, das nach dem erfmdungemäßen Verfahren erhältlich ist.

Vorteilhaft ist der Gegenstand, enthaltend den Klebstoff, der ein Beschichtungssystem enthält, das nach dem erfindungsgemäßen Verfahren erhältlich ist, wenn der Gegenstand aus mindestens zwei gleichen und/oder unterschiedlichen Materialien aufgebaut ist, ausgewählt aus der Gruppe von Holz, Holzwerkstoffen, Möbel, Parkett, Türen, Festerrahmen, metallische Gegenstände, Kunststoffe, Papier, Pappe, Kork oder Leder.

Die Komponente (A) enthält eine Komponente (A1) und gegebenenfalls eine Komponente (A2). Die Komponente (A1) enthält ungesättigte Gruppen enthaltende Oligomere und Polymere. Diese ungesättigte Gruppen enthaltende Oligomere und Polymere sind bevorzugt ausgewählt aus der Gruppe von Polyester(meth)acrylaten, Polyether(meth)acrylaten, Polyepoxy(meth)acrylaten, Polyetherester(meth)acrylaten, Polyurethan(meth)acrylaten, ungesättigten Polyestern mit Allyletherstruktureinheiten und Kombinationen der genannten Verbindungen.

Von den Polyester(meth)acrylaten werden als Komponente (A1) die hydroxylgruppenhaltige Polyester(meth)acrylate mit einer OH-Zahl im Bereich von 30 bis 300 mg KOH/g, bevorzugt von 60 bis 200, besonders bevorzugt von 70 bis 120 mg KOH/g eingesetzt. Bei der Herstellung der hydroxyfunktionellen Polyester(meth)acrylate (A1) können insgesamt 7 Gruppen von Monomerbestandteilen zur Anwendung kommen:
Die erste Gruppe (a) enthält Alkandiole oder Diole oder Gemische dieser. Die Alkandiole weisen ein Molekulargewicht im Bereich von 62 bis 286 g/mol auf. Bevorzugt sind die Alkandiole ausgewählt aus der Gruppe von Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol. Bevorzugte Diole sind Ethersauerstoff-enthaltende Diole, wie Diethylenglykol, Triethylenglykol, Tetraethylenglykol, Dipropylenglykol, Tripropylenglykol, Polyethylen-, Polypropylen- oder Polybutylenglykole mit einem Molekulargewicht im Bereich von 200 bis 4000, bevorzugt 300 bis 2000, besonders bevorzugt 450 bis 1200 g/mol. Umsetzungsprodukte der zuvor genannten Diole mit ε-Caprolacton oder anderen Lactonen können ebenfalls als Diole zum Einsatz gelangen.

Die zweiter Gruppe (b) enthält drei- und höherwertige Alkohole mit einem Molekulargewicht im Bereich von 92 bis 254 g/mol und/oder auf diesen Alkoholen gestartete Polyether. Besonders bevorzugte drei- und höherwertige Alkohole sind Glycerin, Trimethylolpropan, Pentaerythrit, Dipentaerythrit und Sorbit. Ein besonders bevorzugter Polyether ist das Umsetzungsprodukt von 1 mol Trimethylolpropan mit 4 mol Ethylenoxid.

Die dritte Gruppe (c) enthält Monoalkohole. Besonders bevorzugte Monoalkohole sind ausgewählt aus der Gruppe von Ethanol, 1- und 2-Propanol, 1- und 2-Butanol, 1- Hexanol, 2-Ethylhexanol, Cyclohexanol und Benzylalkohol.

Die vierte Gruppe (d) enthält Dicarbonsäuren mit einem Molekulargewicht im Bereich von 104 bis 600 g/mol und / oder deren Anhydride. Bevorzugte Dicarbonsäuren und deren Anhydride sind ausgewählt aus der Gruppe von Phtalsäure, Phtalsäureanhydrid, Isophtalsäure, Tetrahydrophtalsäure, Tetra-hydrophtalsäureanhydrid, Hexahydrophtalsäure, Hexahydrophtalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimere der Fettsäuren, wie sie unter der sechsten Gruppe (f) aufgelistet sind

Die fünfte Gruppe (e) enthält Trimellithsäure oder Trimellithsäureanhydrid.

Die sechste Gruppe (f) enthält Monocarbonsäuren ausgewählt aus der Gruppe von Benzoesäure, Cyclohexancarbonsäure, 2-Ethylhexansäure, Capronsäure, Caprylsäure, Caprinsäure, Laurinsäure, und natürliche und synthetische Fettsäuren, ausgewählt aus der Gruppe von Laurin-, Myristin-, Palmitin-, Margarin-, Stearin-, Behen-, Cerotin-, Palmitolein, Öl-, Icosen-, Linol-, Linolen- und Arachidonsäure.

Die siebte Gruppe (g) enthält Acrylsäure, Methacrylsäure und/oder dimere Acrylsäure. Geeignete hydroxylgruppenhaltige Polyester(meth)acrylate (A1) enthalten das Umsetzungsprodukt von mindestens einem Bestandteil aus Gruppe (a) oder (b) mit mindestens einem Bestandteil aus Gruppe (d) oder (e) und mindestens einem Bestandteil aus Gruppe (g).

Besonders bevorzugte Bestandteile aus der Gruppe (a) sind ausgewählt aus der Gruppe von Ethandiol, 1,2- und 1,3-Propandiol, 1,4-Butandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, ausgewählt aus der Gruppe von Diethylenglykol, Triethylenglykol, Tetraethylenglykol, Dipropylenglykol, und Tripropylenglykol. Bevorzugte Bestandteile aus der Gruppe (b) sind ausgewählt aus der Gruppe von Glycerin, Trimethylolpropan, Pentaerythrit oder das Umsetzungsprodukt von 1 mol Trimethylolpropan mit 4 mol Ethylenoxid. Besonders bevorzugte Bestandteile aus den Gruppen (d) bzw. (e) sind ausgewählt aus der Gruppe von Phthalsäureanhydrid, Isophthalsäure, Tetrahydrophthalsäureanhydrid, Hexahydrophthalsäure, Hexahydrophthalsäureanhydrid, Maleinsäureanhydrid, Fumarsäure, Bernsteinsäureanbydrid, Glutarsäure, Adipinsäure, Dodecandisäure, hydrierte Dimere der Fettsäuren, wie sie unter der 6. Gruppe (f) aufgelistet sind und Trimellithsäureanhydrid. Bevorzugter Bestandteil aus der Gruppe (g) ist Acrylsäure.

Gegebenenfalls können in diese Polyester(meth)acrylate auch aus dem Stand der Technik allgemein bekannte, dispergierend wirkende Gruppen eingebaut werden. So können als Alkoholkomponente anteilig Polyethylenglykole und / oder Methoxypolyethylenglykole verwendet werden. Als Verbindungen können auf Alkoholen gestartete Polyethylenglykole, Polypropylenglykole und deren Blockcopolymere sowie die Monomethylether dieser Polyglykole verwendet werden. Besonders geeignet ist Polyethylenglykol-mono-methylether mit einem Molekulargewicht im Bereich von 500-1500 g/mol.

Weiterhin ist es möglich, nach der Veresterung einen Teil der noch freien, nicht veresterten Carboxylgruppen, insbesondere die der (Meth)acrylsäure, mit Mono-, Di- oder Polyepoxiden umzusetzen. Bevorzugt als Epoxide sind die Glycidylether von monomerem, oligomerem oder polymerem Bisphenol-A, Bisphenol-F, Hexandiol und / oder Butandiol oder deren ethoxylierte und / oder propoxylierte Derivate, wie sie auch zur Synthese von Epoxy(meth)acrylaten eingesetzt werden (s. u.). Diese Reaktion kann insbesondere zur Erhöhung der OH-Zahl des Polyester(meth)acrylats verwendet werden, da bei der Epoxid-Säure-Reaktion jeweils eine OH-Gruppe entsteht. Die Säurezahl des resultierenden Produkts liegt zwischen 0 und 20 mg KOH/g, bevorzugt zwischen 0 und 10 mg KOH/g und besonders bevorzugt zwischen 0 und 5 mg KOH/g. Die Reaktion wird bevorzugt durch Katalysatoren wie Triphenylphosphin, Thiodiglykol, Ammonium- und / oder Phosphoniumhalogeniden und / oder Zirkon- oder Zinnverbindungen wie Zinn(II)ethylhexanoat katalysiert.

Die Herstellung von Polyester(meth)acrylaten wird auf der Seite 3, Zeile 25 bis Seite 6, Zeile 24 der DE-A 4 040 290, auf Seite 5, Zeile 14 bis Seite 11, Zeile 30 der DE-A 3 316 592 und Seite 123 bis 135 von P. K. T. Oldring (Ed.) in Chemistry & Technology of UV & EB Formulations For Coatings, Inks & Paints, Vol. 2, 1991, SITA Technology, London, beschrieben.

Ebenfalls bevorzugt als Komponente (A1) sind die an sich bekannten hydroxylgruppenhaltigen Epoxy(meth)acrylate mit einer OH-Zahl im Bereich von 20 bis 300 mg KOH/g, bevorzugt von 100 bis 280 mg KOH/g, besonders bevorzugt von 150 bis 250 mg KOH/g oder hydroxylgruppenhaltige Polyurethan(meth)acrylate mit einer OH-Zahl im Bereich von 20 bis 300 mg KOH/g, bevorzugt von 40 bis 150 mg KOH/g, besonders bevorzugt von 50 bis 100 mg KOH/g sowie deren Mischungen untereinander und Mischungen mit hydroxylgruppenhaltigen, ungesättigten Polyestern oder Mischungen mit Polyester(meth)acrylaten oder Mischungen hydroxylgruppenhaltiger ungesättigter Polyester mit Polyester(meth)acrylaten. Solche Verbindungen werden ebenfalls auf Seite 37 bis 56 in P. K. T. Oldring (Ed.), Chemistry & Technology of UV & EB Formulations For Coatings, Inks & Paints, Vol. 2, 1991, SITA Technology, London beschrieben. Hydroxylgruppenhaltige Epoxy(meth)acrylate basieren insbesondere auf Umsetzungsprodukten von Acrylsäure und / oder Methacrylsäure mit Epoxiden (Glycidylverbindungen) von monomeren, oligomeren oder polymeren Bisphenol-A, Bisphenol-F, Hexandiol und / oder Butandiol oder deren ethoxylierten und / oder propoxylierten Derivaten.

Ebenfalls geeignet als Komponente (A1) sind hydroxylgruppenhaltige Polyether(meth)acrylate, die aus der Umsetzung von Acrylsäure und / oder Methacrylsäure mit Polyethern hervorgehen. Die Polyether sind ausgewählt aus der Gruppe von Homo-, Co- oder Blockcopolymerisate von Ethylenoxid, Propylenoxid und / oder Tetrahydrofuran auf beliebigen hydroxy- und / oder aminfunktionellen Startermolekülen ausgewählt aus der Gruppe von Trimethylolpropan, Diethylenglykol, Dipropylenglykol, Glycerin, Pentaerythrit, Neopentylglykol, Butandiol und Hexandiol.

Komponente (A1) weist bevorzugt neben den ungesättigten Verbindungen noch NCO-reaktive Verbindungen, insbesondere Hydroxylgruppen auf. Über diese Hydroxylgruppen erfolgt ein teilweiser bzw. vollständiger Einbau in das Polyurethangerüst.

Bevorzugte Komponenten (A1) sind Verbindungen ausgewählt aus der Gruppe der Polyester-(meth)acrylate, Polyether(meth)acrylate, Polyepoxy(meth)acrylate, Urethan(meth)acrylate und Polyetherester(meth)acrylate, welche neben den ungesättigten Gruppen noch Hydroxylgruppen aufweisen.

Besonders bevorzugt als Komponente (A1) sind hydroxyfunktionelle Polyester(meth)acrylate, Polyether(meth)acrylate und Polyepoxy(meth)acrylate.

Weiterhin können Verbindungen der Komponente (A1) alleine oder in Kombination mit den nachgenannten Verbindungen (A2) eingesetzt werden.

Die Komponente (A2) enthält ein oder mehrere (Meth)acrylatgruppen-haltige Alkohole mit einer OH-Zahl im Bereich von 35-1000 mg KOH/g, bevorzugt mit einer OH-Zahl im Bereich von 130 bis 966 mgKOH/g. Solche (Meth)acrylatgruppen-haltige Alkohole sind ausgewählt aus der Gruppe von 2-Hydroxyethyl(meth)acrylat, Polyethylenoxidmono(meth)acrylate, Polypropylenoxidmono-(meth)acrylate, Polyalkylenoxidmono(meth)acrylate, Polycaprolactonmono(meth)acrylate wie Pemcure^{®} 12A (Cognis, DE), 2-Hydroxypropyl(meth)acrylat, 4-Hydroxybutyl(meth)acrylat, 3-Hydroxy-2,2-dimethylpropyl(meth)acrylat, die Mono-, Di-, Tri-, Tetra- oder Penta(meth)acrylate mehrwertiger Alkohole wie Trimethylolpropan, Glycerin, Pentaerythrit, Ditrimethylolpropan, Dipentaerythrit, ethoxyliertes, propoxyliertes oder alkoxyliertes Trimethylolpropan, Glycerin, Pentaerythrit, Ditrimethylolpropan, Dipentaerythrit oder deren technische Gemische, wobei der Einbau von (A2) in das Additionsprodukt der Komponenten (A) bis (D) über noch freie Hydroxyfunktionen erfolgt.

Außerdem können auch Alkohole, die sich aus der Umsetzung von doppelbindungshaltigen Säuren mit gegebenenfalls doppelbindungshaltigen, monomeren Epoxidverbindungen erhalten lassen, als Komponente (A2) eingesetzt werden. Bevorzugte Umsetzungsprodukte sind ausgewählt aus der Gruppe von (Meth)acrylsäure mit Glycidyl(meth)acrylat oder dem Glycidylester tertiärer, gesättigter Monocarbonsäure. Die tertiären, gesättigten Monocarbonsäuren entstammen aus der Gruppe von 2,2-Dimethylbuttersäure, Ethylmethylbutter-, Ethylmethylpentan-, Ethylmethylhexan-, Ethylmethylheptan- und Ethylmethyloktansäure.

Ganz besonders bevorzugt als Komponente A2 sind 2-Hydroxyethyl(meth)acrylat, 2-Hydroxypropyl(meth)acrylat, Pentaerythrittriacrylat, Dipentaerythritpentaacrylat und das Additionsprodukt aus Ethylmethylheptansäureglycidylester mit (Meth)acrylsäure und deren technische Gemische.

Die Komponente (B) enthält eine oder mehrere gegenüber Isocyanatgruppen reaktiven Verbindungen, die für die wässrige Polyurethandispersion dispergierend wirken. Unter gegenüber Isocyanatgruppen reaktiven Verbindungen, die dispergierend wirken, sind Säuren, Basen, ionische Verbindungen und Ethergruppen enthaltende Verbindungen zu verstehen. Bevorzugte Säuren und Basen weisen Gruppen ausgewählt aus der Gruppe von Hydroxyl-, Amino- und Thiolgruppen auf, über die der Einbau in das Reaktionsprodukt der Komponenten (A), (C) und (D) erfolgt und deren isocyanatreaktive Gruppen anschließend in die entsprechenden dispergierend wirkenden Gruppen ausgewählt aus der Gruppe von Sulfonium-, Ammonium-, Carboxylat- und Sulfonat-Salze überführt werden. Besonders bevorzugte Säuren, Basen und ionische Verbindungen sind ausgewählt aus der Gruppe von Mono- und Dihydroxycarbonsäuren, Mono- und Diaminocarbonsäuren, Mono- und Dihydroxysulfonsäuren, Mono- und Diaminosulfonsäuren, Mono- und Dihydroxyphosphonsäuren, Mono- und Diaminophosphonsäuren und ihre Salze wie Dimethylolpropionsäure, Dimethylolbuttersäure, Hydroxypivalinsäure, *N*-(2-Aminoethyl)-alanin, 2-(2-Amino-ethylamino)-ethansulfonsäure, Ethylendiamin-propyl- oder Butylsulfonsäure, 1,2- oder 1,3-Propylendiaminethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von Isophorondiamin (1-Amino-3,3,5-trimethyl-5-aminomethylcyclohexan oder IPDA) und Acrylsäure (EP-A 916 647, Beispiel 1) und dessen Alkali- oder Ammoniumsalze, das Addukt von Natriumbisulfit an Buten-2-diol-1,4, Polyethersulfonat, das propoxylierte Addukt aus 2-Butendiol und NaHSO₃ wie es in DE-A 2 446 440 auf Seite 5-9, Formel I-III beschrieben ist sowie *N*-Methyl-diethanolamin, über Carboxy- oder Carboxylat- und / oder Sulfonatgruppen und / oder Ammoniumgruppen verfügenden Verbindungen. Besonders bevorzugte ionische Verbindungen sind solche, die Carboxyl- und / oder Sulfonatgruppen als ionische Gruppen enthalten, wie die Salze von 2-(2-Amino-ethylamino-)ethansulfonsäure oder des Additionsproduktes von Isophorondiamin und Acrylsäure (EP 916 647 A1, Beispiel 1) sowie der Dimethylolpropionsäure.

Bevorzugte ethergruppenenthaltende Verbindungen sind ausgewählt aus der Gruppe von mit Alkoholen gestartete Polyethylenglykole, Polypropylenglykole und deren Blockcopolymere sowie die Monomethylether dieser Polyglykole. Bevorzugt sind linear aufgebaute Polyether mit einer Funktionalität zwischen 1 und 3, aber auch Verbindungen der allgemeinen Formel (I), 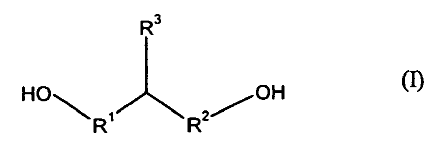 in welcher

R¹ und R² unabhängig voneinander jeweils einen zweiwertigen aliphatischen, cycloaliphatischen oder aromatischen Rest mit 1 bis 18 C-Atomen, die durch Sauerstoff und / oder Stickstoffatome unterbrochen sein können, bedeuten und R³ für einen alkoxyterminierten Polyethylenoxidrest steht.

Bevorzugte Polyether sind ausgewählt aus der Gruppe von einwertigen, im statistischen Mittel 5 bis 70, bevorzugt 7 bis 55 Ethylenoxideinheiten pro Molekül aufweisenden Polyalkylenoxidpolyetheralkoholen, wie sie in an sich bekannter Weise durch Alkoxylierung geeigneter Startermoleküle zugänglich sind und in Ullmanns Encyclopädie der technischen Chemie, 4. Auflage, Band 19, Verlag Chemie, Weinheim Seite 31-38 beschrieben ist.

Dafür bevorzugte Startermoleküle sind ausgewählt aus der Gruppe von gesättigten Monoalkoholen wie Methanol, Ethanol, *n*-Propanol, Isopropanol, *n*-Butanol, Isobutanol, sec-Butanol, die isomeren Pentanole, Hexanole, Octanole und Nonanole, *n*-Decanol, *n*-Dodecanol, *n*-Tetradecanol, *n-*Hexadecanol, *n*-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylethem wie Diethylenglykolmonomethylether, Diethylenglykol-monoethylether, Diethylenglykolmonobutylether, ungesättigten Alkoholen wie Allylalkohol, 1,1-Dimethylallylalkohol oder Oleinalkohol, aromatischen Alkoholen wie Phenol, die isomeren Kresole oder Methoxyphenole, araliphatischen Alkoholen wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, *N*-Methyl- und *N-*Ethylcyclohexylamin oder Dicyclohexylamin sowie heterocyclischen, sekundären Aminen wie Morpholin, Pyrrolidin, Piperidin und *1H-*Pyrazol. Besonders bevorzugte Startermoleküle sind ausgewählt aus der Gruppe von gesättigten Monoalkoholen, Diethylenglykolmonomethyl-, -monoethyl- und -monobutylethem. Insbesondere werden Diethylenglykolmonomethyl-, -monoethyl- oder -monobutylether bevorzugt verwendet.

Für die Alkoxylierungsreaktion geeignete Alkylenoxide sind Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Die genannten Säuren werden durch Umsetzung mit Neutralisationsmitteln, wie Triethylamin, Ethyldiisopropylamin, Dimethylcyclohexylamin, Dimethylethanolamin, Ammoniak, *N-*Ethylmorpholin, LiOH, NaOH und / oder KOH in die entsprechenden Salze überfuhrt. Der Neutralisationsgrad liegt dabei zwischen 50 und 125%.

Bei Komponente (C) handelt es sich um hydroxyfunktionelle Verbindungen ausgewählt aus der Gruppe von Diolen und/ oder Triolen jeweils mit einem Molekulargewicht im Bereich von 62 bis 242 g/mol, hydroxyfunktionellen Polyestern, Polycarbonaten, Polyurethanen, C₂ -, C₃ -, und/oder C₄-Polyethern, Polyetherester, Polycarbonatpolyestem, jeweils mit einem Molekulargewicht im Bereich von 700 bis 4000 g/mol.

Bevorzugte Diole und Triole der Komponente C. sind ausgewählt aus der Gruppe von 2 bis 20 Kohlenstoffatome enthaltenden aliphatischen, araliphatischen oder cycloaliphatischen Diolen oder Triolen. Bevorzugte Diole sind ausgewählt aus der Gruppe von Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Besonders bevorzugt sind 1,4-Butandiol, 1,4-Cyclohexandimethanol und 1,6-Hexandiol.

Bevorzugte Oligomere bzw. höhermolekulare Polyole, wie Di- oder Polyole oder Aminoalkohole mit einem zahlenmittleren Molekulargewicht im Bereich von 500 bis 4000 g / mol, wie hydroxyfunktionelle Oligomere bzw. Polymere wie hydroxyfunktionelle Polyester, Polycarbonate, Polyurethane, C2-, C3-, und / oder C4-Polyether, Polyetherester oder Polycarbonatpolyester weisen eine mittlere Hydroxylfunktionalität von 1,5 bis 3,5, bevorzugt von 1,8 bis 2,5 auf.

Bevorzugte hydroxyfunktionelle Polyesteralkohole sind solche auf Basis von aliphatischen, cycloaliphatischen und / oder aromatischen Di-, Tri- und / oder Polycarbonsäuren mit Di-, Tri- und / oder Polyolen sowie Polyesteralkohole auf Lacton-Basis. Besonders bevorzugte Polyesteralkohole sind ausgewählt aus der Gruppe der Umsetzungsprodukte von Adipinsäure, Isophthalsäure und Phthalsäureanhydrid mit Hexandiol, Butandiol, Diethylenglykol, Monoethylenglykol oder Neopentylglykol oder Mischungen der genannten Diole des Molekulargewichts von 500 bis 4000, bevorzugt 800 bis 2500.

Bevorzugte hydroxyfunktionelle Polyetherole sind ausgewählt aus der Gruppe von durch Polymerisation von cyclischen Ethern oder durch Umsetzung von Alkylenoxiden mit einem Startermolekül erhältlichen Umsetzungsprodukten. Besonders bevorzugt sind Polyethylen- und / oder Polypropylenglykole eines mittleren Molekulargewichts von 500 bis 4000 g/mol sowie Polytetrahydrofurane mit einem mittleren Molekulargewichts im Bereich von 500 bis 4000 g/mol, bevorzugt von 800 bis 3000 g/mol.

Bevorzugte hydroxyfunktionelle Polycarbonate sind hydroxyl-terminierte Polycarbonate, die durch Umsetzung von Diolen oder auch Lacton-modifizierten Diolen oder auch Bisphenolen ausgewählt aus der Gruppe von Bisphenol A, mit Phosgen oder Kohlensäurediestern wie Diphenylcarbonat oder Dimethylcarbonat zugängliche Polycarbonate, polymeren Carbonate des 1,6-Hexandiols mit einem mittleren Molekulargewichts von im Bereich von 500 bis 4000 g/mol und Carbonate als Umsetzungsprodukte von 1,6-Hexandiols mit ε-Caprolacton im molaren Verhältnis im Bereich von 1 bis 0,1. Besonders bevorzugt sind die vorgenannten Polycarbonatdiole mit einem mittleren Molekulargewicht im Bereich von 800 bis 3000 g/mol auf Basis 1,6-Hexandiol und / oder Carbonate von Umsetzungsprodukten des 1,6-Hexandiols mit ε-Caprolacton im molaren Verhältnis im Bereich von 1 bis 0,33.

Bevorzugte hydroxylfunktionelle Polyamidalkohole sind hydroxylterminierte Poly(meth)-acrylatdiole.

Besonders bevorzugte sind die hydroxyfunktionellen Polyester als Komponente (C).

Die Polyisocyanate der Komponente (D) sind ausgewählt aus der Gruppe von aromatischen, araliphatischen, aliphatischen oder cycloaliphatischen Polyisocyanaten oder Mischungen solcher Polyisocyanate (D). Bevorzugte Polyisocyanate sind ausgewählt aus der Gruppe von 1,3-Cyclohexandiisocyanat, 1-Methyl-2,4-diisocyanato-cyclohexan, 1-Methyl-2,6-diisocyanatocyclohexan, Tetramethylendiisocyanat, 4,4'-Diisocyanatodiphenylmethan, 2,4'-Diisocyanatodiphenylmethan, 2,4-Diisocyanatotoluol, 2,6-Diisocyanatotoluol, α,α,α,'α,'-Tetra-methyl-*m*- oder *p*-Xylylendüsocyanat, 1,6-Hexamethylendiisocyanat, 1-Isocyanato-3,3,5-trimethyl-5-isocyanatomethylcyclohexan (*Isop*horondi*i*socyanat oder IPDI), 4,4'-Diisocyanatodicyclohexylmethan sowie deren Mischungen, gegebenenfalls auch mit anderen Isocyanaten oder / und höherfunktionellen Homologen bzw. Oligomeren mit Urethan-, Biuret-, Carbodiimid-, Isocyanurat-, Allophanat-, Iminooxadiazindion- und / oder Uretdiongruppen.

Bevorzugt enthält die Polyisocyanatkomponente (D) mindestens 60 Gew.-% cycloaliphatischer und / oder aliphatischer, mindestens difunktioneller Isocyanate.

Besonders bevorzugt enthält die Polyisocyanatkomponente (D) 1-Isocyanato-3,3,5-trimethyl-5-isocyanatomethylcyclohexan (*I*so*p*horondi*i*socyanat oder IPDI), 1-Methyl-2,4/(2,6)-diisocyanatocyclohexan, 4,4'-Diisocyanatodicyclohexylmethan und / oder 1,6-Hexamethylendiisocyanat.

Als geeignete Oligo(meth)acrylate (E) sind die Verbindungen der Komponente (A1) zu verstehen, die eine Doppelbindungsdichte größer 2,0 mol Doppelbindungen/kg Substanz, bevorzugt größer 3,0 mol Doppelbindungen/kg Substanz (besonders bevorzugt größer 5,0 mol Doppelbindungen/kg Substanz) aufweisen.

Die Komponente (E) ist bevorzugt ausgewählt aus der Gruppe von (Meth)acrylaten von Tetrolen und Hexolen, wie (Meth)acrylate von Pentaerythrit, Ditrimethylolpropan, Dipentaerythrit, Sorbitol, ethoxyliertes, propoxyliertes oder alkoxyliertes Pentaerythrit, Ditrimethylolpropan, Dipentaerythrit, Sorbitol und / oder die bei der (Meth)acrylierung der vorgenannten Verbindungen anfallenden technischen Gemische. Die Oligo(meth)acrylate (E) können auch in Mischungen eingesetzt werden.

Zur Erhöhung der Molmasse werden Mono-, Di-, Polyamine und / oder Aminoalkohole als Komponente (F) verwendet. Bevorzugte Di- und / oder Polyamine sind solche, die gegenüber den Isocyanatgruppen reaktiver sind als Wasser, da die Verlängerung des Polyesterurethan(meth)acrylats gegebenenfalls im wässrigen Medium stattfindet. Besonders bevorzugt sind die Di- und/oder Polyamine ausgewählt aus der Gruppe von Ethylendiamin, 1,6-Hexamethylendiamin, Isophorondiamin, 1,3-, 1,4-Phenylendiamin, 4,4'-Diphenylmethandiamin, aminofunktionelle Polyethylenoxide, aminofunktionelle Polypropylenoxide (bekannt unter dem Namen Jeffamin^{®}, D-Reihe [Huntsman Corp. Europe, Zavantem, Belgien]), Triethylentetraamin und Hydrazin. Ganz besonders bevorzugt ist Ethylendiamin.

Bevorzugte Monoamine sind ausgewählt aus der Gruppe von Butylamin, Ethylamin und Amine der Jeffamin^{®} M-Reihe (Huntsman Corp. Europe, Zavantem, Belgien), aminofunktionelle Polyethylenoxide, aminofunktionelle Polypropylenoxide und / oder Aminoalkohole.

Zur Herstellung der erfindungsgemäßen Polyester(meth)acrylaturethan-Dispersionen können sämtliche, aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der Organischen Chemie, Houben-Weyl, 4. Auflage, Band E20 / Teil 2 auf Seite 1682, Georg Thieme Verlag, Stuttgart, 1987. Bevorzugt ist das Schmelz-Emulgier- und das Aceton-Verfahren. Besonders bevorzugt wird das Aceton-Verfahren.

Zur Herstellung des Reatkionsproduktes nach Schritt I) werden die Komponenten (A), (B) und (C) im Reaktor vorgelegt und gegebenenfalls mit Aceton verdünnt. Zur Beschleunigung der Addition an Isocyanat werden Isocyanatadditionsreaktionkatalysatoren ausgewählt aus der Gruppe von Triethylamin, 1,4-Diazabicyclo-[2,2,2]-oktan, Zinndioktoat oder Dibutylzinndilaurat, zugesetzt, und die Mischung wird erwärmt, um ein Anspringen der Reaktion zu ermöglichen. In der Regel sind dazu Temperaturen von 30 bis 60 °C nötig. Anschließend tropft man das oder die Polyisocyanate (D) zu. Auch die umgekehrte Variante ist möglich, wobei dann die Polyisocyanate (D) vorgelegt und die isocyanatreaktiven Komponenten (A), (B) und (C) zugegeben werden.

Zur Kontrolle der Reaktion wird der NCO-Gehalt in regelmäßigen Abständen über Titration, Infrarot- oder Nahinfrarot-Spektroskopie, bestimmt.

Die molaren Verhältnisse von gegenüber Isocyanaten reaktiven Gruppen in (A), (B) und (C) zu Iscocyanatgruppen in (D) betragen von 0,8 : 1 bis 2,5 : 1, bevorzugt 1,2 : 1 bis 1,5 : 1.

Nach der Herstellung des Produktes nach Schritt I), des erfindungsgemäßen Verfahrens aus den Komponenten (A) bis (D), erfolgt, falls dies noch nicht in den Ausgangsmolekülen durchgeführt wurde, die Salzbildung der ionisch dispergierend wirkenden Zentren der Verbindungen (B). Dazu werden bevorzugt Basen ausgewählt aus der Gruppe von Triethylamin, Ethyldiisopropylamin, Dimethylcyclohexylamin, Dimethylethanolamin, Ammoniak, *N*-Ethylmorpholin, LiOH, NaOH und / oder KOH eingesetzt. Werden als Komponente (B) nur ethergruppen enthaltende Verbindungen eingesetzt, entfällt dieser Neutralisationsschritt.

Vor dem Schritt I) kommt es zur Zugabe eines Oligo(meth)acrylats (E) oder einer Mischung von Oligo(meth)acrylaten (E). Sobald diese sich gelöst haben, folgt der letzte Reaktionsschritt, bei dem im wässrigen Medium eine Molmassenerhöhung und die Ausbildung der für das erfindungsgemäße Beschichtungssystem benötigten Polyester(meth)acrylaturethan-Dispersionen stattfinden: Das Polyurethan, synthetisiert nach Schritt I) aus den Komponenten (A) bis (D), und das oder die Oligo(meth)acrylate (E) gelöst in Aceton werden unter starkem Rühren entweder in das Dispergierwasser, das das oder die Polyamine (F) enthält, eingetragen oder man rührt umgekehrt die Dispergierwasser-Polyamin-Mischung zu der Polyurethan-Oligo(meth)acrylat-Aceton-Lösung. Optional erfolgt dann die Molmassenerhöhung durch Reaktion von noch vorhandenen Isocyanatgruppen der Umsetzungsprodukte nach Schritt I) aus (A) bis (D) mit den aminischen Verbindungen (F). Außerdem bilden sich die Dispersionen aus, die im erfindungsgemäßen Beschichtungssystem enthalten sind. Die eingesetzte Menge an Polyamin (F) hängt von den noch vorhandenen, nicht umgesetzten Isocyanatgruppen ab. Die Umsetzung der noch freien Isocyanatgruppen mit dem Polyamin (F) kann zu 35% bis 150% erfolgen. In dem Fall, dass ein Unterschuss an Polyamin (F) eingesetzt wird, reagieren noch freie Isocyanatgruppen langsam mit Wasser ab. Wird ein Überschuss an Polyamin (F) verwendet, so liegen keine unreagierten Isocyanatgruppen mehr vor und es wird ein aminfunktionelles Polyester(meth)acrylaturethan erhalten. Bevorzugt werden 50% bis 100%, bsonders bevorzugt 60% bis 96% der noch freien Isocyanatgruppen mit dem Polyamin (F) umgesetzt.

In einer Variante des Verfahrens kann auch zunächst der Dispergierschritt durchgeführt werden und anschließend wird Komponente (F), vorteilhaft verdünnt in Wasser, zugegeben.

In einer weiteren Variante ist es möglich, die Molmassenerhöhung durch das Polyamin (F) bereits in acetonischer Lösung vor oder nach der Zugabe der Oligo(meth)acrylate (E) durchzuführen. Falls erwünscht, kann das organische Lösungsmittel - sofern vorhanden - abdestilliert werden. Die Dispersionen haben dann einen Festkörpergehalt von 20 bis 60 Gew.-%, insbesondere 30 bis 58 Gew.-%.

Es ist ebenfalls möglich, Dispergier- und Destillationsschritt parallel, das heißt gleichzeitig durchzuführen.

Durch die Zugabe der Oligo(meth)acrylate (E) unmittelbar vor dem Dispergierschritt wird die Komponente (E) mit dem aus den Komponenten (A) bis (D) synthetisierten Polyurethan codispergiert. Der Einbau der Oligo(meth)acrylate (E), die Hydroxylgruppen aufweisen können, in das Polyurethangerüst ist nicht gewollt und wird durch die Zugabe kurz vor dem Dispergierschritt unterbunden.

Die erfindungsgemäßen Dispersionen ergeben nach Verdunsten des Wassers klare Filme. Durch anschließende strahlenchemisch und / oder radikalisch induzierte Vernetzung härten die Filme zu besonders hochwertigen, kratzfesten und chemikalienresistenten Lacküberzügen aus.

Bei der strahlenchemisch induzierten Polymerisation mittels UV-, Elektronen-, Röntgen- oder Gamma-Strahlen ist die UV-Härtung besonders bevorzugt. Die UV-Härtung wird in Gegenwart von Fotoinitiatoren ausgelöst. Bei den Fotoinitiatoren wird prinzipiell zwischen zwei Typen unterschieden, dem unimolekularen (Typ I) und dem bimolekularen (Typ II). Geeignete (Typ I)-Systeme sind aromatische Ketonverbindungen ausgewählt aus der Gruppe von Benzophenone in Kombination mit tertiären Aminen, Alkylbenzophenone, 4,4`-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, A-cylphosphinoxide, 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Bevorzugt sind Fotoinitiatoren, die leicht in wässrige Beschichtungsmittel einzuarbeiten sind. Solche Produkte sind beispielsweise Irgacure^{®} 500 (eine Mischung von Benzophenon und (1-Hydroxycyclohexyl)phenylketon, Fa. Ciba, Lampertheim, DE), Irgacure^{®} 819 DW (Phenylbis-(2,4,6-trimethylbenzoyl)-phosphinoxid, Fa. Ciba, Lampertheim, DE), Esacure^{®} KIP EM (Oligo-[2-hydroxy-2-methyl-1-[4-(1-methylvinyl)-phenyl]-propanone], Fa. Lamberti, Aldizzate, Italien). Es können auch Gemische dieser Verbindungen eingesetzt werden.

Zur Einarbeitung der Photoinitiatoren können auch polare Lösemittel, ausgewählt aus der Gruppe von Aceton und Isopropanol, verwendet werden.

Gegebenenfalls wird die UV-Härtung vorteilhaft bei 30-70 °C durchgeführt werden, weil bei höherer Temperatur der Umsetzungsgrad an (Meth)acrylatgruppen tendenziell erhöht ist. Dies kann bessere Beständigkeitseigenschaften zur Folge haben. Es ist bei der UV-Härtung jedoch auch eine mögliche Temperaturempfindlichkeit des Substrats zu berücksichtigen, so dass optimale Härtungsbedingungen für eine bestimmte Beschichtungsmittel-Substrat-Kombination vom Fachmann in einfachen Vorversuchen zu ermitteln sind.

Gegebenenfalls wird unter Inertgasatmosphäre, d. h. unter Sauerstoffausschluss, gehärtet, um eine Inhibierung der radikalischen Vernetzung durch Sauerstoff zu verhindern.

Erfolgt die Härtung thermisch-radikalisch, eignen sich wasserlösliche Peroxide oder wäßrige Emulsionen nicht-wasserlöslicher Initiatoren. Diese Radikalbildner können in bekannter Weise mit Beschleunigern kombiniert werden.

Die erfindungsgemäßen Beschichtungssysteme lassen sich durch die üblichen Techniken auf unterschiedlichste Substrate applizieren, bevorzugt Spritzen, Walzen, Fluten, Drucken, Rakeln, Gießen, Streichen und Tauchen.

Mit den erfindungsgemäßen Beschichtungssystemen können grundsätzlich alle Substrate lackiert bzw. beschichtet werden. Bevorzugte Substrate sind ausgewählt aus der Gruppe von mineralische Untergründe, Holz, Holzwerkstoffe, Möbel, Parkett, Türen, Fensterrahmen, metallische Gegenstände, Kunststoffe, Papier, Pappe, Kork oder Leder. Sie eignen sich hierbei als Grundierung und / oder als Decklack. Zusätzlich können die erfindungsgemäßen Beschichtungssysteme auch in oder als Klebstoffe eingesetzt werden, z. B. in Kontaktklebstoffen, in thermoaktivierbaren Klebstoffen oder in Kaschierklebstoffen.

Die erfindungsgemäßen Beschichtungssysteme können alleine aber auch in Bindemittelmischungen mit anderen Dispersionen eingesetzt werden. Dies können Dispersionen sein, die ebenfalls ungesättigte Gruppen enthalten ausgewählt aus der Gruppe von ungesättigten, polymerisierbaren Gruppen enthaltenden Dispersionen auf Polyester-, Polyurethan-, Polyepoxy(meth)acrylat-, Polyether-, Polyamid-, Polysiloxan-, Polycarbonat-, Epoxyacrylat-, Polymerisat-, Polyesteracrylat-, Polyurethan-Polyacrylat- und / oder Polyacrylatbasis.

Es können auch solche Dispersionen auf Basis von Polyestern, Polyurethanen, Polyepoxy(meth)acrylaten, Polyethern, Polyamiden, Polyvinylestern, Polyvinylethern, Polysiloxanen, Polycarbonaten, Polymerisaten und / oder Polyacrylaten, in den erfindungsgemäßen Beschichtungssystemen enthalten sein, die funktionelle Gruppen, wie Alkoxysilangruppen, Hydroxygruppen und / oder gegebenenfalls in blockierter Form vorliegende Isocyanatgruppen aufweisen. So können Dual-Cure-Systeme hergestellt werden, die über zwei verschiedene Mechanismen ausgehärtet werden können.

Es können auch Dispersionen auf Basis von Polyestern, Polyurethanen, Polyepoxy(meth)acrylaten, Polyethern, Polyamiden, Polysiloxanen, Polyvinylethern, Polybutadienen, Polyisoprenen, Chlorkautschuken, Polycarbonaten, Polyvinylestem, Polyvinylchloriden, Polymerisaten, Polyacrylaten, Polyurethan-Polyacrylat-, Polyesteracrylat-, Polyetheracrylat-, Alkyd-, Polycarbonat-, Polyepoxy-, Epoxyacrylat in den erfindungsgemäßen Beschichtungssystemen enthalten sein, die keine funktionellen Gruppen aufweisen. Damit kann der Grad der Vernetzungsdichte reduziert werden, die physikalische Trocknung beeinflusst, z. B. beschleunigt werden, oder eine Elastifizierung bzw. auch eine Haftungsanpassung vorgenommen werden.

Beschichtungsmittel, welche die erfindungsgemäßen Beschichtungssysteme enthalten, können auch Aminovernetzerharze, auf Melamin- oder Harnstoffbasis und / oder Polyisocyanate mit freien oder mit blockierten Polyisocyanatgruppen, auf Basis von gegebenenfalls hydrophilierenden Gruppen enthaltenden Polyisocyanaten aus Hexamethylendiisocyanat, Isophorondiisocyanat und / oder Toluylidendiisocyanat mit Urethan-, Uretdion-, Iminoxadiazindion-, Isocyanurat-, Biuret- und / oder Allophanatstrukturen in den erfindungsgemäßen Beschichtungssystemen zugesetzt sein. Als weitere Vernetzer sind auch Carbodiimide oder Polyaziridine möglich.

Die erfindungsgemäßen Beschichtungssysteme können mit den in der Lacktechnologie bekannten Bindemitteln, Hilfsstoffen und Additiven, ausgewählt aus der Gruppe von Pigmente, Farbstoffe oder Mattierungsmittel versetzt bzw. kombiniert werden. Dies sind Verlaufs- und Benetzungsadditive, Slip-Additive, Pigmente einschließlich Metallic-Effektpigmente, Füllstoffe, Nanopartikel, Lichtschutzpartikel, Anti-Vergilbungsadditive, Verdicker und Additive zur Reduktion der Oberflächenspannung.

Besonders geeignet sind die erfindungsmäßigen Beschichtungssysteme für Holz- und Kunststoffapplikationen mit einem Pigmentgehalt ≥ 10 Gew.-%, bezogen auf die gesamte Formulierung.

Ebenfalls besonders geeignet sind die erfindungsmäßigen Beschichtungssysteme für Holz- und Kunststoffapplikationen auf stark strapazierten Alltagsgegenständen, wie z. B. Mobiltelefongehäuse, bei denen es auf hohen Glanz, geringe Verkratzbarkeit und gute Beständigkeiten gegen Chemikalien, wie z. B. Sonnencreme, ankommt.

### Beispiele:

### 1) Herstellung einer erfindungsgemäßen, UV-härtbaren, wässrigen Polyurethan-Dispersion zur Verwendung als Bindemittel für harte, pigmentierbare Lacke

241,5 Teile des Polyepoxyacrylats Ebecryl^{®} 600 (Cytec Surface Specialties SA/NV, Drogenbos, Belgien), Komponente (A), 127,27 Teile des Polyesters Desmophen^{®} PE 170 HN (Bayer MaterialScience AG, Leverkusen, DE), Komponente (A), 5,25 Teile Neopentylglykol, Komponente (C), 31,98 Teile Dimethylolpropionsäure, Komponente (B), 323,10 Teile 4,4'-Diisocyanatodicyclohexylmethan, Komponente (D), und 0,7 Teile Dibutylzinndilaurat werden in 200 Teilen Aceton gelöst und bis zu einem NCO-Gehalt von 3,7 Gew.-% bei 50 °C unter Rühren umgesetzt. Der so erhaltenen Präpolymer-Lösung werden eine Mischung von 80,50 Teilen des propoxylierten Glycerintriacrylats OTA 480 (Cytec Surface Specialties SA/NV, Drogenbos, Belgien), Komponente (E), und 78,32 Teilen des Ditrimethylolpropantetraacrylats Ebecryl^{®} 140 (Cytec Surface Specialties SA/NV, Drogenbos, Belgien), Komponente (E), zugesetzt und untergerührt. Anschließend erfolgt die Neutralisation durch Zugabe und Unterrühren von 22,93 Teilen Triethylamin. Die klare Lösung wird unter Rühren in 1150 Teilen Wasser eingetragen. Daraufhin wird eine Mischung aus 22,36 Teilen Ethylendiamin, Komponente (F), und 134,2 Teilen Wasser der Dispersion unter Rühren zugesetzt. Im Anschluss wird das Aceton unter leichtem Vakuum aus der Dispersion abdestilliert. Es wird eine erfindungsgemäße, UV-härtbare, wässrige Polyurethan-Dispersion 1) mit einem Feststoffgehalt von 42 Gew.-%, einer mittleren Teilchengröße von 121 nm und einem pH-Wert von 8,4 erhalten.

### 2) Herstellung einer erfindungsgemäßen, UV-härtbaren, wässrigen Polyurethan-Dispersion zur Verwendung als Bindemittel für harte, pigmentierbare Lacke

322,00 Teile des Polyepoxyacrylats Ebecryl^{®} 6040 (Cytec Surface Specialties SA/NV, Drogenbos, Belgien), Komponente (A), 127,5 Teile des Polyesters Desmophen^{®} PE 170 HN (Bayer MaterialScience AG, Leverkusen, DE), Komponente (A), 5,25 Teile Neopentylglykol, Komponente (C), 31,98 Teile Dimethylolpropionsäure, Komponente (B), 323,10 Teile 4,4'-Diisocyanatodicyclohexylmethan, Komponente (D), und 0,7 Teile Dibutylzinndilaurat werden in 200 Teilen Aceton gelöst und bis zu einem NCO-Gehalt von 3,7 Gew.-% bei 50 °C unter Rühren umgesetzt. Der so erhaltenen Präpolymer-Lösung werden eine Mischung von 16,29 Teilen des Polyetheracrylats Desmolux^{®} 6958 (Bayer MaterialScience AG, Leverkusen, DE), Komponente (E), und 62,5 Teilen des Ditrimethylolpropantetraacrylats Ebecryl^{®} 140 (Cytec Surface Specialties SA/NV, Drogenbos, Belgien), Komponente (E), zugesetzt und untergerührt. Anschließend erfolgt die Neutralisation durch Zugabe und Unterrühren von 22,93 Teilen Triethylamin. Die klare Lösung wird unter Rühren in 1150 Teilen Wasser eingetragen. Daraufhin wird eine Mischung aus 22,36 Teilen Ethylendiamin, Komponente (F), und 134,2 Teilen Wasser der Dispersion unter Rühren zugesetzt. Im Anschluss wird das Aceton unter leichtem Vakuum aus der Dispersion abdestilliert. Es wird eine erfindungsgemäße, UV-härtbare, wässrige Polyurethan-Dispersion 2) mit einem Feststoffgehalt von 41 Gew.-%, einer mittleren Teilchengröße von 61 nm und einem pH-Wert von 8,7 erhalten.

### 3) Herstellung einer erfindungsgemäßen, UV-härtbaren, wässrigen Polyurethan-Dispersion zur Verwendung als Bindemittel für harte, pigmentierbare Lacke

322,00 Teile des Polyepoxyacrylats Ebecryl^{®} 6040 (Cytec Surface Specialties SA/NV, Drogenbos, Belgien), Komponente (A), 127,5 Teile des Polyesters Desmophen^{®} PE 170 HN (Bayer MaterialScience AG, Leverkusen, DE), Komponente (A), 5,25 Teile Neopentylglykol, Komponente (C), 31,98 Teile Dimethylolpropionsäure, Komponente (B), 323,10 Teile 4,4'-Diisocyanatodicyclohexylmethan, Komponente (D), und 0,7 Teile Dibutylzinndilaurat werden in 200 Teilen Aceton gelöst und bis zu einem NCO-Gehalt von 3,7 Gew.-% bei 50 °C unter Rühren umgesetzt. Der so erhaltenen Präpolymer-Lösung werden eine Mischung von 16,83 Teilen des Polyesteracrylats Laromer^{®} PE 44 F (BASF AG, Ludwigshafen, DE), Komponente (E), und 62,5 Teilen des Ditrimethylolpropantetraacrylats Ebecryl^{®} 140 (Cytec Surface Specialties SA/NV, Drogenbos, Belgien), Komponente (E), zugesetzt und untergerührt. Anschließend erfolgt die Neutralisation durch Zugabe und Unterrühren von 22,93 Teilen Triethylamin. Die klare Lösung wird unter Rühren in 1150 Teilen Wasser eingetragen. Daraufhin wird eine Mischung aus 22,36 Teilen Ethylendiamin, Komponente (F), und 134,2 Teilen Wasser der Dispersion unter Rühren zugesetzt. Im Anschluss wird das Aceton unter leichtem Vakuum aus der Dispersion abdestilliert. Es wird eine erfindungsgemäße, UV-härtbare, wässrige Polyurethan-Dispersion 3) mit einem Feststoffgehalt von 43,6 Gew.-%, einer mittleren Teilchengröße von 66 nm und einem pH-Wert von 8,7 erhalten.

### 4) Herstellung des Polyesteracrylats A1) gemäß Beispiel 1 in EP-B 872 502

224,9 Teile Hexandiol-1,6, 96,6 Teile Trimethylolpropan, 146,0 Teile Adipinsäure, 144,3 Teile Acrylsäure, 3,1 Teile p-Toluolsulfonsäure, 1,7 Teile Hydrochinonmonomethylether, 0,6 Teile 2,6-Di-tert.-Butylkresol und 250 Teile n-Heptan setzt man 10 Stunden bei 96 °C unter Rühren, Rückflusskochen und Wasserabscheiden um. Anschließend wird das Lösungsmittel abdestilliert. Die OH-Zahl beträgt 165 mg KOH/g, die Säurezahl 1,0 mg KOH/g und die dynamische Viskosität 520 mPas, gemessen nach DIN 53018 bei 23 °C.

### 5) Herstellung des Additionsproduktes f1) gemäß Beispiel 1 in EP-B 872 502

In einem mit Rührer, Thermometer, Tropftrichter, Rückflusskühler und regelbarer Heizung versehenen Reaktionsgefäß werden 55,0 Teile 2-Hydroxyethylacrylat und 0,059 Teile Dibutylzinnoxid vorgelegt. Unter intensivem Durchleiten von Luft wird auf 110 °C erhitzt, und es werden innerhalb von 1 Stunde 45,94 Teile ε-Caprolacton über den Tropftrichter hinzu dosiert. Es wird noch 3 Stunden unter Rühren auf 110 °C erhitzt, bis eine Viskosität im Bereich von 66-70 sec bei 23 °C (DIN EN ISO 2431) erreicht ist.

### 6) Herstellung einer wässrigen, UV-härtbaren Polyurethan-Dispersion gemäß Beispiel 1 in EP-B 872 502

Zu einem Gemisch aus 200 Teilen des Polyesteracrylats 4), 68,4 Teilen des Additionsproduktes 5), 36,0 Teilen Dimethylolpropionsäure und 23,9 Teilen Triethylamin werden 214,0 Teilen 1-Isocyanato-3,3,5-trimethyl-5-isocyanatomethylcyclohexan unter Rühren bei Temperaturen von 55 bis 70 °C innerhalb von 3 Stunden zugetropft. Während der Nachreaktion bei der Temperatur von 75 bis 80 °C fällt der NCO-Gehalt auf den konstanten Wert von 2,2 Gew.-%. Anschließend dispergiert man das erhaltene Präpolymer unter starkem Rühren in 749,4 Teilen Wasser bei einer Temperatur von 38 bis 42 °C. Danach wird die erhaltene Dispersion mit einem Gemisch aus 9,6 Teilen Ethylendiamin und 14,3 Teilen Wasser innerhalb von 15 min. bei gleicher Temperatur tropfenweise versetzt. Danach wird noch so lange nachgerührt, bis IR-spektroskopisch kein Isocyanat bei 2270 cm⁻¹ mehr nachweisbar ist. Es wird eine UV-härtbare, wässrige Polyurethan-Dispersion 6) gemäß Beispiel 1 in EP-B 872 502 mit einem Feststoffgehalt von 40 Gew.-%, einer mittleren Teilchengröße von 99 nm und einem pH-Wert von 7,6 erhalten.

### 7) Herstellung einer wässrigen, UV-härtbaren Polyurethan-Dispersion gemäß Beispiel A.1 in EP-B 1 311 639

In einem Vierhalskolben ausgerüstet mit KPG-Rührer, Rückflusskühler, Thermometer und Stickstoff-Deckung wird die erste Hälfte eines vorgefertigten Polyol-Gemisches aus 36,47 Teilen des Polyesteracrylats Laromer^{®} LR 8800 (BASF AG, Ludwigshafen, DE), 145,90 Teilen des Polyesters Bester^{®} 42 H (Poliolchimica S.p.A., Parona Lomellina, Italien), 14,59 Teilen 1,4-Butandiol, 21,88 Teilen Dimethylolpropionsäure, 0,58 Teilen 2,6-Di-tert-butyl-p-kresol und 72,95 Teile N-Methylpyrrolidon mit 136,14 Teile 1-Isocyanato-3,3,5-trimethyl-5-isocyanatomethylcyclohexan unter Stickstoff-Deckung ca. eine Stunde bei 80-90 °C gerührt. Nach Zugabe der zweiten Hälfte des vorgefertigten Polyol-Gemisches wird unter Stickstoff-Deckung bei 80-90 °C weiter gerührt, bis ein NCO-Gehalt von 3,70 Gew.-% erreicht ist. Der Verlauf der Reaktion wird mittels Titration verfolgt. Das Präpolymer wird dann unter intensivem Rühren in ein Gemisch aus 547 Teilen Leitungswasser und 16,51 Teilen Triethylamin dispergiert und anschließend zum Aufbau der Polyurethan-Dispersion mit 11,32 Teilen Ethylendiamin kettenverlängert. Es wird eine UV-härtbare, wässrige Polyurethan-Dispersion 7) gemäß Beispiel A. 1 in EP-B 1 311 639 mit einem Feststoffgehalt von 39 Gew.-%, einer mittleren Teilchengröße von 173 nm und einem pH-Wert von 8,5 erhalten.

### 8) Herstellung einer erfindungsgemäßen, UV-härtbaren, wässrigen Polyurethan-Dispersion zur Verwendung als Bindemittel für harte Hochglanzlacke

400,62 Teile des Polyesteracrylats Laromer^{®} PE 44 F (BASF AG, Ludwigshafen, DE), Komponente (A), 4,78 Teile Neopentylglykol, Komponente (C), 33,99 Teile Dimethylolpropionsäure, Komponente (B), 199,74 Teile 4,4'-Diisocyanatodicyclohexylmethan, Komponente (D), und 0,6 Teile Dibutylzinndilaurat werden in 200 Teilen Aceton gelöst und bis zu einem NCO-Gehalt von 1,4 Gew.-% bei 50 °C unter Rühren umgesetzt. Der so erhaltenen Präpolymer-Lösung werden 200,00 Teile des ethoxylierten Pentaerythrittetraacrylats Miramer^{®} M4004 (Rahn AG, Zürich, CH), Komponente (E), zugesetzt und untergerührt. Anschließend erfolgt die Neutralisation durch Zugabe und Unterrühren von 23,58 Teilen Triethylamin. Die klare Lösung wird unter Rühren in 1235 Teilen Wasser eingetragen. Daraufhin wird eine Mischung aus 7,99 Teilen Ethylendiamin, Komponente (F), und 24,00 Teilen Wasser der Dispersion unter Rühren zugesetzt. Im Anschluss wird das Aceton unter leichtem Vakuum aus der Dispersion abdestilliert. Es wird eine erfindungsgemäße, UV-härtbare, wässrige Polyurethan-Dispersion 3) mit einem Feststoffgehalt von 42,0 Gew.-%, einer mittleren Teilchengröße von 86 nm und einem pH-Wert von 8,3 erhalten.

### 9) Herstellung einer erfindungsgemäßen, UV-härtbaren, wässrigen Polyurethan-Dispersion zur Verwendung als Bindemittel für harte Hochglanzlacke

400,62 Teile des Polyesteracrylats Laromer^{®} PE 44 F (BASF AG, Ludwigshafen, DE), Komponente (A), 4,78 Teile Neopentylglykol, Komponente (C), 33,99 Teile Dimethylolpropionsäure, Komponente (B), 199,74 Teile 4,4'-Diisocyanatodicyclohexylmethan, Komponente (D), und 0,6 Teile Dibutylzinndilaurat werden in 200 Teilen Aceton gelöst und bis zu einem NCO-Gehalt von 1,4 Gew.-% bei 50 °C unter Rühren umgesetzt. Der so erhaltenen Präpolymer-Lösung werden 200,00 Teile des Pentaerythrittriacrylats AgiSyn^{®} 2884 (AGI Co., Taipeh, Taiwan), Komponente (E), zugesetzt und untergerührt. Anschließend erfolgt die Neutralisation durch Zugabe und Unterrühren von 23,58 Teilen Triethylamin. Die klare Lösung wird unter Rühren in 1235 Teilen Wasser eingetragen. Daraufhin wird eine Mischung aus 7,99 Teilen Ethylendiamin, Komponente (F), und 24,00 Teilen Wasser der Dispersion unter Rühren zugesetzt. Im Anschluss wird das Aceton unter leichtem Vakuum aus der Dispersion abdestilliert. Es wird eine erfindungsgemäße, UV-härtbare, wässrige Polyurethan-Dispersion 3) mit einem Feststoffgehalt von 42,5 Gew.-%, einer mittleren Teilchengröße von 173 nm und einem pH-Wert von 8,3 erhalten.

**Tabelle 1: Formulierungen für pigmentierte Systeme**

| | Pigmentierte Lacke [A-1] und [A-2] (Gewichtsteile) | Klarlack [A-3] (Gewichtsteile) |
|---|---|---|
| UV-Dispersion (angepasst auf 40% Festkörper) | 74,5 | 150 |
| Butylglykol / Wasser (1:1) | 6,0 | 12 |
| Antischaummittel BYK^{®} 028 A¹ | 0,2 | - |
| Irgacure^{®} 500² | 0,5 | 1,5 |
| Irgacure^{®} 819 DW³ | 0,5 | - |
| Benetzungsmittel BYK^{®} 346⁴ | 0,5 | 0,3 |
| TiO₂-Paste (67%ig TiO₂) | 15 | - |
| Verdickungsmittel BYK^{®} 425⁵ | 1 | 0,4 |
| Wasser | 1,8 | - |
| Gesamt | 100,0 | 164,2 |

**Tabelle 2: Applikations- und Härtungsbedingungen für pigmentierte Systeme**

| | Pigmentierte Lacke [A-1] | Pigmentierte Lacke [A-2] | Klarlack [A-3] |
|---|---|---|---|
| Substrat | Polyesterfolie | Glas | Glas |
| Auftrag durch Rakeln | Kastenrakel, 1 x 150 µm, Nassfilm | Kastenrakel, 1 x 150 µm, Nassfilm | Kastenrakel, 1 x 150 µm, Nassfilm |
| Entlüftungszeit | 10 min, 50 °C | 10 min, 50 °C | 10 min, 50 °C |

| | | | |
|---|---|---|---|
| ¹ Mischung schaumzerstörender Polysiloxane und hydrophober Feststoffe in Polyglykol der Fa. BYK, Wesel, DE ² eine Mischung von Benzophenon und (1-Hydroxycyclohexyl)phenylketon der Fa. Ciba, Lampertheim, DE ³ Phenylbis-(2,4,6-trimethylbenzoyl)-phosphinoxid der Fa. Ciba, Lampertheim, DE ⁴ Lösung eines polyethermodifizierten Polydimethylsiloxans der Fa. BYK, Wesel, DE ⁵ Lösung eines harnstoffinodifizierten Polyurethans der Fa. BYK, Wesel, DE ⁶ UV-Anlage der Fa. Barberàn, Model HOK 6/2 (ca. 80 W/cm) ⁷Zum Test der Rekativität wird die nach der Aushärtung erzielte Härte in Pendelskunden in Abhängigkeit von verschiedenen Bandlaufkeiten gemessen. Bleibt die Pendelhärte auch bei höchster Bandgeschwindigkeit bei Werten über 100 Pendelsekunden so besitzt die Beschichtung eine ausgezeichnete Reaktivität. | | | |

Nach der UV-Härtung werden die beschichteten Substrate für 16 Stunden bei Raumtemperatur gelagert und anschließend den Prüfungen unterzogen.

**Tabelle 3: Daten zur anwendungstechnischen Prüfung pigmentierter Systeme**

| Anwendungstechnische Prüfung | Beispiel 1 | Beispiel 2 | Beispiel 3 | Beispiel 6 (EP-B 872 502) | Beispiel 7 (EP-B 1 311 639) |
|---|---|---|---|---|---|
| Filmtransparenz⁶, Klarlack [A-3] | 5 | 5 | 5 | 5 | 1 |
| Lagerstabilität: 50 °C/24 h | OK | OK | OK | OK | OK |
| Lagerstabilität: 40 °C/28 d | OK | OK | OK | OK | OK |
| Wasserfestigkeit⁷, pigmentierter Lack [A-1] | 5 | 5 | 4-5 | 5 | 1 |

| | | | | | |
|---|---|---|---|---|---|
| ⁸ Die Filmtransparenz wird durch Aufziehen eines Filmes auf einer Glasplatte und anschließender physikalischer Trocknung visuell beurteilt: Note 5: klar, keine Trübung oder Schleierbildung erkennbar Note 4: bei einem Betrachtungswinkel von ca. 10-20 ° ist eine leichte Schleierbildung erkennbar Note 3: bei einem Betrachtungswinkel von ca. 45-80 ° ist eine leichte Trübung erkennbar Note 2: deutliche Trübung Note 1: matte Oberfläche bzw. griesige Oberfläche ⁹ Die Beständigkeitseigenschaften werden nach 16 Stunden Belastung durch optische Inaugenscheinnahme beurteilt: Note 5: Keine sichtbaren Veränderungen (keine Beschädigung). Note 4: Leichte Glanz- oder Farbtonveränderung, nur sichtbar, wenn sich die Lichtquelle in der Prüfoberfläche auf oder dicht neben der Markierung spiegelt und direkt zum Auge des Betrachters reflektiert wird, oder einige eben erkennbare, abgegrenzte Markierungen (Quellungsring erkennbar, bzw. keine Erweichung mit dem Fingernagel erkennbar). Note 3: Leichte Markierung aus mehreren Blickwinkeln zu sehen, zum Beispiel ein eben erkennbarer fast völliger Kreis oder Kreisfläche (Quellungsring erkennbar, Kratzspuren des Fingernagels erkennbar). Note 2: Starke Markierung, die Oberflächenstruktur ist jedoch weitgehend unverändert. (geschlossener Quellungsring, Kratzspuren feststellbar). Note 1: Starke Markierung, die Oberflächenstruktur ist jedoch weitgehend unverändert, Markierung ist bis zum Untergrund durchkratzbar Note 0: Starke Markierung, die Oberflächenstruktur ist verändert oder das Oberflächenmaterial ist ganz oder teilweise zerstört oder das Filterpapier haftet an der Oberfläche. | | | | | |

| Anwendungstechnische Prüfung | Beispiel 1 | Beispiel 2 | Beispiel 3 | Beispiel 6 (EP-B 872 502) | Beispiel 7 (EP-B 1 311 639) |
|---|---|---|---|---|---|
| Kaffeebeständigkeit⁹, pigmentierter Lack [A-1] | 5 | 4 | 4 | 3 | 2 |
| Ethanol/Wasser(50%)-Beständigkeit,⁹ pigmentierter Lack [A-1] | 4-5 | 4 | 4 | 1 | 1 |
| Rotweinbeständigkeit⁹, pigmentier-ter Lack [A-1] | 4 | 4-5 | 3 | 3 | 1 |
| Ethanolbeständigkeit(98%)⁹, pig-mentierter Lack [A-1] | 1 | 4 | 2-3 | 1 | 1 |
| Ethylacetatbeständigkeit,⁹ pigmen-tierter Lack [A-1] | 5 | 5 | 5 | 5 | 4 |
| Ammoniakbeständigkeit,⁹ pigmen-tierter Lack [A-1] | 5 | 5 | 5 | 4 | 4 |
| Pendelhärte nach König, DIN 53157, Klarlack [A-3] nach phk. Trocknung | 45 sec | 35 sec | 30 sec | 24 sec | 10 sec |
| Pendelhärte nach König, DIN 53157, Klarlack [A-3] nach UV-Härtung | 137 sec, 136 sec, 122 sec | 148 sec, 146 sec, 113 sec | 148 sec, 116 sec, 104 sec | 147 sec, 120 sec, 105 sec | 40 sec, 37 sec, 37 sec |
| Pendelhärte nach König, DIN 53157, pigmentierter Lack [A-2] | 119 sec, 111 sec | 125 sec, 115 sec | 126 sec, 118 sec | 67 sec, 52 sec | 11 sec, 6 sec |
| Weisanlaufen nach Verkratzen, Klarlack⁸, Klarlack [A-3] | 3 | 3 | 4 | 5 | 2 |
| Bruchdehnung19, Klarlack [A-5] | <2% | 3% | <2% | 5% | 380% |

| | | | | | |
|---|---|---|---|---|---|
| ¹⁰Das Weisanlaufen nach Verkratzung wird durch Verkratzen mittels einer Münze geprüft. Ist an der Verkratzungsstelle keinerlei Weisanlaufen erkennbar, dann wird dieses Ergebnis als exzellent beurteilt (Note 5). | | | | | |

**Tabelle 4: Formulierungen für Klarlacksysteme**

| | Klarlacke [A-4], [A-5] und [A-6] (Ge-wichtsteile) |
|---|---|
| UV-Dispersion (angepasst auf 40% Festkörper) | 96,5 |
| Benetzungsmittel BYK^{®} 348⁹ | 1,0 |
| Irgacure^{®} 127¹⁰ | 2,5 |
| Gesamt | 100,0 |

**Tabelle 5: Applikations- und Härtungsbedingungen für Klarlacksysteme**

| | Klarlack [A-4] | Klarlack [A-5] | Klarlack [A-6] |
|---|---|---|---|
| Substrat | Glas | Glas | Pocan S 1506¹¹ |
| Auftrag durch Rakeln | Kastenrakel, 1 x 150 µm, Nassfilm | Kastenrakel, 1 x 250 µm, Nassfilm | Spiralrakel, 1 x 100 µm, Nassfilm |
| Entlüftungszeit | 45 min, 50 °C | 16 h, 50°C | 45 min, 50 °C |
| IR-Trocknung | 60 - 70 °C Oberflä-chentemperatur | 60 - 70 °C Oberflä-chentemperatur | 60 - 70 °C Oberflä-chentemperatur |
| Härtung | Hg¹² | Hg¹⁴ | Hg¹⁴ |

| | | | |
|---|---|---|---|
| Nach der UV-Härtung werden die beschichteten Substrate für 16 h bei Raumtemperatur gelagert und anschließend den Prüfungen unterzogen. ¹¹ Lösung eines polyethermodifizierten Polydimethylsiloxans der Fa. BYK, Wesel, DE ¹² 31%-ige Lösung von 2-Hydroxy-1-{4-[4-(2-hydroxy-2-methyl-propionyl)-benzyl)-phenyl}-2-methyl-propan-1-on in Aceton der Fa. Ciba, Lampertheim, DE ¹³ Polybutylenterephthalat der Fa. Lanxess, Leverkusen, DE ¹⁴ UV-Anlage der Fa. Cefla, I (ca. 120 W/cm, ca. 1000 mJ/cm²) | | | |

**Tabelle 6: Daten zur anwendungstechnischen Prüfung von Klarlacksystemen**

| Anwendungstechnische Prüfung | Beispiel 1 | Beispiel 6 (EP-B 872 502) | Beispiel 7 (EP-B 1 311 639) | Beispiel 8 | Beispiel 9 |
|---|---|---|---|---|---|
| Filmtransparenz⁸, Klarlack [A-4] | 1 | 5 | 1 | 5 | 4 |
| Glanz (20 °/60°)¹³, Klarlack [A-6] | 83%/90% | 86%/89% | 1%/11% | 83%/89% | 83%/90% |
| Sonnencremebeständigkeit (Op-tik/Haftung)¹⁴ , Klarlack [A-6] | 4/GT = 0 | 0/GT = 5 | 0/GT = 4 | 5/GT = 0 | 5/GT = 0 |
| Methanolbeständigkeit¹⁵, Klarlack [A-6] | 5 | 5 | 5 | 5 | 5 |
| Bleistifthärte¹⁶, Klarlack [A-4] | H | F | <F | F | 2H |
| Pendelhärte nach König, DIN 53157, Klarlack [A-4] | 186 sec | 195 sec | 42 sec | 178 sec | 190 sec |
| Bruchdehnung¹⁷, Klarlack [A-5] | <2% | 5% | 380% | <2% | 3% |

| | | | | | |
|---|---|---|---|---|---|
| ¹⁵ Von den gehärteten Kunststoflklarlackaufzügen [A-6] wurde der Glanz (Winkel 20 °) mittels eines "micro-Tri-gloss" der Fa. BYK Gardner bestimmt ¹⁶ Die Beständigkeitseigenschaften werden nach 16 Stunden Belastung durch optische Inaugenscheinnahme beurteilt (vgl. Fußnote 9). Zusätzlich wurde die Haftung mittels Gitterschnitt auf der belasteten Fläche gemäß DIN EN ISO 2409 durchgeführt (GT = 0 keine Ablösung, perfekte Haftung). ¹⁷ Zur Bestimmung wurden auf den gehärteten Kunststoffaufzügen [A-6] 5 Doppelhübe mit einen Methanol getränkten Wattebausch durchgeführt. Beurteilung durch optische Inaugenscheinnahme (vgl. Fußnote 9) ¹⁸ "CH - ZSH 2090 Pencilhardness Tester" der Fa. Zehntner Testing Instruments, ISO 15184, EN 13523-4, Winkel 45 °, Auflagegewicht 1000 g, 5 Zyklen, Mitsubishi-Bleistifte ¹⁹ Zur Bestimmung der Bruchdehnung wurden von den gehärteten Glasplattenklarlackaufrügen [A-5] die Glasplatte ca. 5 min in Wasser gelagert. Dabei löste sich der Film von der Glasplatte. Anschließend erfolgte die Trocknung bei 16 h 50°C und dann die Bestimmung der Bruchdehnung nach EN ISO 527. | | | | | |

## Patentansprüche

1. Verfahren zur Herstellung von harten, strahlungshärtbaren, Beschichtungssystemen auf Basis von wässrigen Polyurethandispersionen umfassend folgende Schritte
I) Umsetzung von:
A) 40 bis 80 Gew.-% einer hydroxylhaltigen Komponente enthaltend
A1) 10 bis 80 Gew.-%, bezogen auf die Summe der Komponenten (A) bis (F) eines oder mehrerer hydroxylgruppenhaltiger Präpolymere, die ausgewählt sind aus der Gruppe der Polyester, Polyether, Poly-epoxy(meth)acrylate und Polyurethane mit einer OH-Zahl im Bereich von 40 bis 300 mg KOH/g und Gruppen enthalten, die unter Einwirkung energiereicher Strahlung mit ethylenisch ungesättigten Doppelbindungen unter Polymerisation reagiert, und gegebenenfalls
A2) 0 bis 50 Gew.-% bezogen auf die Summe der Komponenten (A) bis (F) eines
oder mehrerer (Meth)acrylatgruppenhaltiger Alkohole mit einer OH-Zahl im Bereich von 35 bis 1000 mg KOH/g
B) 0,1 bis 20 Gew.-% einer oder mehrerer gegenüber Isocyanatgruppen reaktiven Verbindungen, die für die Polyurethandispersion dispergierend wirken,
C) 0 bis 30 Gew.-% hydroxyfunktionelle Verbindungen ausgewählt aus der Gruppe von Diolen, Triolen jeweils mit einem Molekulargewichts im Bereich von 62 bis 242 g/mol, Polyestern, Polycarbonaten, Polyurethanen, C₂-, C₃-, und / oder C₄-Polyethern, Polyetherestern und Polycarbonatpolyestern jeweils mit einem Molekulargewicht im Bereich von 700 bis 4000 g / Mol
mit
D) 10 bis 50 Gew.-% eines oder mehrerer Polyisocyanaten
zu einem Polyurethan und danach
II) Zusatz von
E) 2 bis 40 Gew.-% Oligo(meth)acrylate, die ausgewählt sind aus der Gruppe der Komponente (A1) mit einer Doppelbindungsdichte von größer 2,0 mol Doppelbindungen/kg Substanz und durch Einwirkung energiereicher Strahlung mit ethylenisch ungesättigten Verbindungen unter Polymerisation reagieren,
III) anschließende Dispergierung des nach Schritt II) erhaltenen Produktes in Wasser zu einer wässrigen Polyurethandispersion und
IV) Umsetzung der aus Schritt III) erhaltenen wässrigen Polyurethandispersion mit
F) 0,1 bis 10 Gew.-%, eines oder mehrerer Mono-, Di-, oder Polyamine und / oder
Aminoalkohole,
wobei sich die Anteile der Komponenten (A) bis (F) zu 100 Gew.-% addieren und die Beschichtungssysteme nach Härtung eine Pendelhärte nach König nach DIN 53157 von größer 60 sec bei einem 150 µm dicken Nassfilmstärkeauftrag und nach EN ISO 527 eine Bruchdehnung von kleiner 150% bei einem 250 µm dicken Nassfilmstärkeauftrag aufweisen.

2. Verfahren nach Anspruch 1, wobei die Komponenten (A), (B) und (C) im Reaktor vorgelegt, gegebenenfalls mit einem mit Wasser mischbaren aber gegenüber Isocyanatgruppen inerten Lösungsmittel verdünnt und auf Temperaturen von 30 bis 60 °C aufgeheizt werden, wobei gegebenenfalls zur Mischung der Verbindungen (A), (B) und (C) Isocyanatadditionsreaktionkatalysatoren gegeben werden, bevor der Umsatz mit dem oder den Polyisocyanaten (D) erfolgt, wobei die molaren Verhältnisse von gegenüber Isocyanaten reaktiven Gruppen in (A), (B) und (C) zu Isocyanatgruppen in (D) im Bereich von 0,8 : 1 bis 2,5 : 1 liegen und wobei das Polyurethan, erhältlich nach Schritt I), mit den reaktiven Oligo(meth)acrylaten (E) in Aceton zu einer Oligo(meth)acrylat-Aceton-Lösung gelöst werden und unter starkem Rühren gemäß Schritt III und IV) entweder in das Dispergierwasser, das das oder die Polyamine (F) enthält, eingetragen oder umgekehrt die Dispergierwasser-Polyamin-Mischung zu der Poly-urethan-Oligo(meth)acrylat-Aceton-Lösung gegeben wird, gegebenenfalls wird das Aceton anschließend abdestilliert.

3. Harte, strahlungshärtbare Beschichtungssysteme erhältlich nach einem der Verfahren nach Anspruch 1 bis 2.

4. Beschichtungssystem nach Anspruch 3, wobei 2 bis 40 Gew.-% Oligo(meth)acrylate (E) auf der Basis von (Meth)acrylatestem, erhältlich aus der Veresterung von (Meth)acrylsäure mit Alkoholen, ausgewählt aus der Gruppe von Tetrolen und Hexolen, enthalten sind.

5. Beschichtungssystem nach einem der Ansprüche 3 bis 4, wobei 2 bis 40 Gew.-% Oligo(meth)acrylate (E) auf der Basis von Polyester(meth)acrylaten mit einer OH-Zahl im Bereich von 30 bis 300 mg KOH/g enthalten sind.

6. Beschichtungssystem nach einem der Ansprüche 3 bis 5, wobei 2 bis 40 Gew.-% Oligo(meth)acrylate (E) auf der Basis von Polyether(meth)acrylaten mit einer OH-Zahl im Bereich von 5 bis 200 mg KOH/g, enthalten sind.

7. Beschichtungssystem nach einem der Ansprüche 3 bis 6, wobei 2 bis 40 Gew.-% Oligo(meth)acrylate (E) auf der Basis von Polyepoxy(meth)acrylaten mit einer OH-Zahl im Bereich von 20 bis 300 mg KOH/g enthalten sind.

8. Beschichtungssystem, erhältlich nach einem der Ansprüche 3 bis 7, wobei 2 bis 40 Gew.- % von Mischungen von Oligo(meth)acrylaten (E) ausgewählt aus der Gruppe der Polyester-, Polyether, Polyurethan-, Polyepoxy(meth)acrylaten und (Meth)acrylatestem, erhältlich durch Veresterung von Methacrylsäure mit Alkoholen ausgewählt aus der Gruppe von Tetrolen und Hexolen, enthalten sind.

9. Beschichtungssystem nach einem der Ansprüche 3 bis 8, wobei der Schritt IV) in acetonischer Lösung vor oder nach der Zugabe der Komponente E durchgeführt wird.

10. Beschichtungssystem nach einem der Ansprüche 3 bis 9, wobei die wässrige Polyurethan-Dispersion, erhältlich nach Schritt III), mindestens noch einen Initiator und gegebenenfalls weitere Hilfsmittel und Zusatzstoffe enthält, die eine Aushärtung mit energiereicher Strahlung ermöglichten.

11. Beschichtungssystem nach einem der Ansprüche 3 bis 10, wobei die wässrige Polyurethan-Dispersion, erhältlich nach Schritt III) weniger als 5 Gew.-% an organischen Lösemitteln enthält.

12. Harte, Klar- oder pigmentierte Lacke enthaltend ein Beschichtungssystem nach einem der Ansprüche 3 bis 11.

13. Klebstoff enthaltend ein Beschichtungssystem nach einem der Ansprüche 3 bis 11.

14. Substrat enthaltend einen harten, Klar- oder pigmentierten Lack nach Anspruch 12, wobei das Substrat ausgewählt ist aus der Gruppe von Holz, Holzwerkstoffen, Möbel, Parkett, Türen, Fensterrahmen, metallische Gegenstände, Kunststoffe, Papier, Pappe, Kork oder Leder.

15. Gegenstand enthaltend den Klebstoff nach Anspruch 13, wobei der Gegenstand aus mindestens zwei gleichen und/oder unterschiedlichen Materialien aufgebaut ist ausgewählt aus der Gruppe von Holz, Holzwerkstoffen, Möbel, Parkett, Türen, Fensterrahmen, metallische Gegenstände, Kunststoffe, Papier, Pappe, Kork oder Leder.

## Claims

1. Process for producing hard, radiation-curable coating systems based on aqueous polyurethane dispersions, comprising the following steps:
I) reaction of:
A) 40% to 80% by weight of a hydroxyl-containing component containing
A1) 10% to 80% by weight, based on the sum of components (A) to (F), of one or more hydroxyl-containing prepolymers selected from the group of polyesters, polyethers, polyepoxy (meth)acrylates and polyurethanes having an OH number in the range from 40 to 300 mg KOH/g and containing groups which, under exposure to high-energy radiation, undergo polymerization reaction with ethylenically unsaturated double bonds, and optionally
A2) 0% to 50% by weight, based on the sum of
components (A) to (F), of one or more alcohols containing (meth)acrylate groups and having an OH number in the range from 35 to 1000 mg KOH/g,
B) 0.1% to 20% by weight of one or more compounds that are reactive towards isocyanate groups and act dispersively for the polyurethane dispersion,
C) 0% to 30% by weight of hydroxy-functional compounds selected from the group of diols, triols, having in each case a molecular weight in the range from 62 to 242 g/mol, polyesters, polycarbonates, polyurethanes, C₂, C₃, and / or C₄ polyethers, polyether esters and polycarbonate polyesters having in each case a molecular weight in the range from 700 to 4000 g / mole
with
D) 10% to 50% by weight of one or more polyisocyanates to form a polyurethane and thereafter II) addition of
E) 2% to 40% by weight of oligo(meth)acrylates selected from the group of component (A1) having a double bond density of greater than 2.0 mol of double bonds/kg of substance and through exposure to high-energy radiation undergoing polymerization reaction with ethylenically unsaturated compounds,
III) subsequent dispersing of the product obtained according to step II) in water to form an aqueous polyurethane dispersion, and
IV) reaction of the aqueous polyurethane dispersion obtained from step III) with
F) 0.1% to 10% by weight of one or more mono-, di-, or polyamines and/or amino alcohols, the fractions of components (A) to (F) adding up to 100% by weight and the coating systems, after curing, having a König pendulum hardness to DIN 53157 of greater than 60 sec for an applied film with a wet thickness of 150 µm and a breaking extension to EN ISO 527 of less than 150% for an applied film with a wet thickness of 250 µm.

2. Process according to Claim 1, where components (A), (B) and (C) are introduced as an initial charge to the reactor, optionally in dilution with a solvent which is miscible with water but inert towards isocyanate groups, and this initial charge is heated to temperatures of 30 to 60°C, with isocyanate addition reaction catalysts being optionally added to the mixture of the compounds (A), (B) and (C) before the reaction takes place with the polyisocyanate or polyisocyanates (D), the molar ratios of isocyanate-reactive groups in (A), (B) and (C) to isocyanate groups in (D) being situated in the range from 0.8:1 to 2.5:1, and the polyurethane obtainable according to step I) being dissolved with the reactive oligo(meth)acrylate (E) in acetone, to form an oligo(meth)acrylate-acetone solution, and, with vigorous stirring according to step III and IV), either this solution being introduced into the dispersing water comprising the polyamine or polyamines (F) or, conversely, the dispersing water/polyamine mixture being added to the polyurethane-oligo(meth)acrylate-acetone solution, after which, optionally, the acetone is removed by distillation.

3. Hard, radiation-curable coating systems obtainable by one of the processes according to Claim 1 to 2.

4. Coating system according to Claim 3, where 2% to 40% by weight of oligo(meth)acrylates (E) based on (meth)acrylate esters obtainable from the esterification of (meth)acrylic acid with alcohols selected from the group of tetrols and hexols are present.

5. Coating system according to any one of Claims 3 to 4, where 2% to 40% by weight of oligo(meth)acrylates (E) based on polyester (meth)acrylates having an OH number in the range from 30 to 300 mg KOH/g are present.

6. Coating system according to any one of Claims 3 to 5, where 2% to 40% by weight of oligo(meth)acrylates (E) based on polyether (meth)acrylates having an OH number in the range from 5 to 200 mg KOH/g are present.

7. Coating system according to any one of Claims 3 to 6, where 2% to 40% by weight of oligo(meth)acrylates (E) based on polyepoxy (meth)acrylates having an OH number in the range from 20 to 300 mg KOH/g are present.

8. Coating system obtainable according to any one of Claims 3 to 7, where 2% to 40% by weight of mixtures of oligo(meth)acrylates (E) selected from the group of polyester, polyether, polyurethane, polyepoxy (meth)acrylates and (meth)acrylate esters obtainable by esterification of (meth)acrylic acid with alcohols selected from the group of tetrols and hexols are present.

9. Coating system according to any one of Claims 3 to 8, where step IV) is carried out in acetonic solution before or after the addition of component E.

10. Coating system according to any one of Claims 3 to 9, where the aqueous polyurethane dispersion obtainable according to step III) comprises at least a further initiator and optionally further auxiliaries and additives which allow curing with high-energy radiation.

11. Coating system according to any one of Claims 3 to 10, where the aqueous polyurethane dispersion obtainable according to step III) contains less than 5% by weight of organic solvents.

12. Hard transparent or pigmented coating materials comprising a coating system according to any one of Claims 3 to 11.

13. Adhesive comprising a coating system according to any one of Claims 3 to 11.

14. Substrate comprising a hard transparent or pigmented coating material according to Claim 12, where the substrate is selected from the group of wood, wood-based materials, furniture, wood-block flooring, doors, window frames, metallic articles, plastics, paper, cardboard, cork or leather.

15. Article comprising the adhesive according to Claim 13, where the article is selected from at least two alike and/or different materials selected from the group of wood, wood-based materials, furniture, wood-block flooring, doors, window frames, metallic articles, plastics, paper, cardboard, cork or leather.

## Revendications

1. Procédé pour la production de systèmes de revêtement durs, durcissables par irradiation, à base de dispersions aqueuses de polyuréthanne, comprenant les étapes suivantes
I) mise en réaction de :
A) 40 à 80 % en poids d'un composant hydroxylé contenant
A1) 10 à 80 % en poids, par rapport à la somme des composants (A) à (F), d'un ou plusieurs prépolymères contenant des groupes hydroxy, qui sont choisis dans le groupe des polyesters, polyéthers, poly-époxy(méth)-acrylates et polyuréthannes ayant un indice de groupes OH dans la plage de 40 à 300 mg de KOH/g et contiennent des groupes qui, sous l'effet d'un rayonnement à haute énergie, réagissent en polymérisant avec des doubles liaisons à insaturation éthylénique,
et éventuellement
A2) 0 à 50 % en poids, par rapport à la somme des composants (A) à (F), d'un ou plusieurs alcools contenant des groupes (méth)acrylate ayant un indice de groupes OH dans la plage de 35 à 1 000 mg de KOH/g
B) 0,1 à 20 % en poids d'un ou plusieurs composés réactifs vis-à-vis de groupes isocyanate, qui ont un effet dispersant pour la dispersion de polyuréthanne,
C) 0 à 30 % en poids de composés à fonction hydroxy choisis dans le groupe des diols, triols ayant chacun une masse moléculaire dans la plage de 62 à 242 g/mole, polyesters, polycarbonates, polyuréthannes, polyéthers en C₂, C₃ et/ou C₄, polyéther-esters et polycarbonate-polyesters ayant chacun une masse moléculaire dans la plage de 700 à 4 000 g/mole
avec
D) 10 à 50 % en poids d'un ou plusieurs polyisocyanates
pour l'obtention d'un polyuréthanne et ensuite
II) addition de
E) 2 à 40 % en poids d'oligo(méth)acrylates, qui sont choisis dans le groupe du composant (A1), ayant une densité de doubles liaisons supérieure à 2,0 moles de doubles liaisons/kg de substance et, sous l'effet d'un rayonnement à haute énergie, réagissent en polymérisant avec des composés à insaturation éthylénique,
III) dispersion subséquente du produit obtenu selon l'étape II), dans de l'eau, pour l'obtention d'une dispersion aqueuse de polyuréthanne et
IV) mise en réaction de la dispersion aqueuse de polyuréthanne obtenue dans l'étape III), avec F) 0,1 à 10 % en poids d'une ou plusieurs mono-, di-ou polyamines et/ou d'un ou plusieurs aminoalcools,
la somme des proportions des composants (A) à (F) étant égale à 100 % en poids et les systèmes de revêtement présentant après durcissement une dureté au pendule selon König conformément à DIN 53157 de plus de 60 secondes pour une application d'une épaisseur de film humide de 150 µm et conformément à EN ISO 527 un allongement à la rupture de moins de 150 % pour une application d'une épaisseur de film humide de 250 µm.

2. Procédé selon la revendication 1, dans lequel les composants (A), (B) et (C) sont disposés au préalable dans le réacteur, éventuellement dilués avec un solvant miscible à l'eau mais inerte vis-à-vis des groupes isocyanate, et chauffés à des températures de 30 à 60 °C, dans lequel éventuellement on ajoute des catalyseurs de réaction d'addition d'isocyanate au mélange des composés (A), (B) et (C), avant d'effectuer la réaction avec le ou les polyisocyanates (D), dans lequel les rapports molaires des groupes réactifs vis-à-vis d'isocyanates dans (A), (B) et (C) aux groupes isocyanates dans (D) se situent dans la plage de 0,8:1 à 2,5:1 et dans lequel le polyuréthanne pouvant être obtenu selon l'étape I) est dissous avec les oligo(méth)acrylates (E) dans de l'acétone, pour l'obtention d'une solution d'oligo(méth)acrylate-acétone et, sous forte agitation, selon l'étape III et l'étape IV) soit introduit dans l'eau de dispersion, qui contient la ou les polyamines (F), soit, inversement le mélange de polyamine-eau de dispersion est ajouté à la solution de polyuréthanne-oligo(méth)acrylate-acétone, et éventuellement l'acétone est ensuite éliminée par distillation.

3. Systèmes de revêtement durs, durcissables par irradiation, pouvant être obtenus conformément à l'un des procédés selon les revendications 1 et 2.

4. Système de revêtement selon la revendication 3, dans lequel sont contenus de 2 à 40 % en poids d'oligo(méth)acrylates (E) à base d'esters (méth)acrylate, pouvant être obtenus par l'estérification d'acide (méth)acrylique par des alcools, choisis dans le groupe des tétraols et hexols.

5. Système de revêtement selon l'une quelconque des revendications 3 et 4, dans lequel sont contenus de 2 à 40 % en poids d'oligo(méth)acrylates (E) à base de polyester(méth)acrylates ayant un indice de groupes OH dans la plage de 30 à 300 mg de KOH/g.

6. Système de revêtement selon l'une quelconque des revendications 3 à 5, dans lequel sont contenus de 2 à 40 % en poids d'oligo(méth)acrylates (E) à base de polyéther(méth)acrylates ayant un indice de groupes OH dans la plage de 5 à 200 mg de KOH/g.

7. Système de revêtement selon l'une quelconque des revendications 3 à 6, dans lequel sont contenus de 2 à.40 % en poids d'oligo(méth)acrylates (E) à base de polyépoxy(méth)acrylates ayant un indice de groupes OH dans la plage de 20 à 300 mg de KOH/g.

8. Système de revêtement, pouvant être obtenu selon l'une quelconque des revendications 3 à 7, dans lequel sont contenus de 2 à 40 % en poids de mélanges d'oligo(méth)acrylates (E) choisis dans le groupe des polyester-, polyéther-, polyuréthanne-, polyépoxy(méth)acrylates et esters (méth)acrylate, pouvant être obtenus par estérification d'acide méthacrylique par des alcools choisis dans le groupe des tétraols et hexols.

9. Système de revêtement selon l'une quelconque des revendications 3 à 8, dans lequel l'étape IV) est effectuée en solution acétonique avant ou après l'addition du composant E.

10. Système de revêtement selon l'une quelconque des revendications 3 à 9, dans lequel la dispersion aqueuse de polyuréthanne, pouvant être obtenue selon l'étape III), contient au moins un amorceur et éventuellement d'autres adjuvants et additifs, qui ont permis un durcissement par un rayonnement à haute énergie.

11. Système de revêtement selon l'une quelconque des revendications 3 à 10, dans lequel la dispersion aqueuse de polyuréthanne, pouvant être obtenue selon l'étape III), contient moins de 5 % en poids de solvants organiques.

12. Laques dures, incolores ou pigmentées, contenant un système de revêtement selon l'une quelconque des revendications 3 à 11.

13. Adhésif contenant un système de revêtement selon l'une quelconque des revendications 3 à 11.

14. Subjectile comportant une laque dure, incolore ou pigmentée selon la revendication 12, le subjectile étant choisi dans le groupe constitué par le bois, les matériaux à base de bois, les meubles, le parquet, des portes, des châssis de fenêtres, des articles métalliques, des matières plastiques, le papier, le carton, le liège ou le cuir.

15. Article comportant l'adhésif selon la revendication 13, l'article constitué d'au moins deux matériaux identiques et/ou différents étant choisi dans le groupe constitué par le bois, les matériaux à base de bois, les meubles, le parquet, des portes, des châssis de fenêtres, des articles métalliques, des matières plastiques, le papier, le carton, le liège ou le cuir.
